(19) Europäisches Patentamt / European Patent Office / Office européen des brevets

(11) **EP 4 708 025 A1**

(12) **EUROPEAN PATENT APPLICATION**

(43) Date of publication:
**11.03.2026 Bulletin 2026/11**

(21) Application number: **24199620.6**

(22) Date of filing: **10.09.2024**

(51) International Patent Classification (IPC):
**G06F 7/58** (2006.01)

(52) Cooperative Patent Classification (CPC):
**G06F 7/588; H04L 9/0852**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BTQ AG**
**9490 Vaduz (LI)**

(72) Inventor: **RHODE, Peter**
**9490 Vaduz (LI)**

(74) Representative: **Finnegan Europe LLP**
**1 London Bridge**
**London SE1 9BG (GB)**

(54) **SYSTEM AND METHOD FOR QUANTUM RANDOM NUMBER GENERATION**

(57) The present disclosure relates to systems and method for generating a quantum random number using a quantum network. The system may comprise a receiver for receiving from a plurality of nodes in a quantum network a plurality of initial quantum random numbers "IQRNs", wherein each initial quantum random number (IQRN) is generated by executing a quantum protocol between a first node and a second node comprised in the quantum network, and wherein each IQRN is associated with a first unique identifier (ID) uniquely identifying the first node, and a second unique identifier (ID) uniquely identifying the second node; a processor configured to: analyse the plurality of IQRNs and retain a subset of the IQRNs that satisfy a consensus criterion; generate the QRN using the subset of retained IQRNs.

100

FIG. 1A

EP 4 708 025 A1

FIG. 1B

150

| | | | | | |
|---|---|---|---|---|---|
| 154-1 | 154-2 | 154-3 | 154-4 | 154-5 | 154-6 |
| Demand | $s_{i,j}$ | Nodes ID | Timestamps | Verification data | Vote outcome |
| D | $s_{1,2}$ | $1-2$ | $t_{1,2}$ | $v_{1,2}$ | 1 |
| D | $s_{1,3}$ | $1-3$ | $t_{1,3}$ | $v_{1,3}$ | 0 |
| D | $s_{1,4}$ | $1-4$ | $t_{1,4}$ | $v_{1,4}$ | 1 |
| D | $s_{1,5}$ | $1-5$ | $t_{1,5}$ | $v_{1,5}$ | 1 |
| D | $s_{1,6}$ | $1-6$ | $t_{1,6}$ | $v_{1,6}$ | 1 |
| D | $s_{1,7}$ | $1-7$ | $t_{1,7}$ | $v_{1,7}$ | 1 |
| D | $s_{1,8}$ | $1-8$ | $t_{1,8}$ | $v_{1,8}$ | 1 |
| D | $s_{2,1}$ | $2-1$ | $t_{2,1}$ | $v_{2,1}$ | 1 |
| D | $s_{2,3}$ | $2-3$ | $t_{2,3}$ | $v_{2,3}$ | 1 |
| D | $s_{2,4}$ | $2-4$ | $t_{2,4}$ | $v_{2,4}$ | 1 |
| D | $s_{2,5}$ | $2-5$ | $t_{2,5}$ | $v_{2,5}$ | 0 |
| D | $s_{2,6}$ | $2-6$ | $t_{2,6}$ | $v_{2,6}$ | 1 |
| D | $s_{2,7}$ | $2-7$ | $t_{2,7}$ | $v_{2,7}$ | 1 |
| D | $s_{2,8}$ | $2-8$ | $t_{2,8}$ | $v_{2,8}$ | 1 |
| D | $s_{3,1}$ | $3-1$ | $t_{3,1}$ | $v_{3,1}$ | 0 |
| ⋮ | ⋮ | ⋮ | ⋮ | ⋮ | ⋮ |
| D | $s_{8,7}$ | $8-7$ | $t_{8,7}$ | $v_{8,7}$ | 1 |

152

# FIG. 1C

**Description**

**BACKGROUND**

In today's digital era, randomness plays an increasing role across a spectrum of applications, spanning gaming, lotteries, computer simulations, cryptography, cybersecurity, IoT, banking, telecommunications, and blockchains. While conventional software Random Number Generators (RNGs), also known as Pseudo-RNGs (PRNGs), have been widely utilized, they are not always sufficient due to their deterministic nature. PRNGs rely on algorithms to generate sequences of numbers, which, while appearing random, can be predicted since they are based on predefined rules.

To address the limitations of PRNGs, hardware devices called True RNGs (TRNGs) have emerged. TRNGs harness physical processes that are inherently unpredictable to produce truly random sequences of numbers. Therefore, they are ideal for applications where genuine randomness is required. Within the TRNGs group, hardware devices may rely on classical phenomena such as thermal or atmospheric noise, or in the case of quantum TRNGs (QRNGs), exploit quantum physics processes like photon polarization. While classical TRNGs based on noise sources or entropy sources have vulnerabilities, such as susceptibility to environmental changes or potential attacks through environment control, quantum TRNGs offer increased reliability due to their foundation in quantum physics. Quantum TRNGs leverage the inherently random behaviour of subatomic particles, which is one of the few completely random processes in nature. By linking RNG outcomes to quantum particle behaviour, QRNGs ensure unbiased, unpredictable, and uncontrollable results.

However, the high cost of quantum hardware compared to classical hardware makes achieving local true quantum randomness a challenge. In practical scenarios, entities lacking access to quantum hardware often resort to outsourcing quantum random number generation to external services. This raises concerns regarding the security and trustworthiness of these external quantum random number generation services. To address these concerns, one approach involves employing a distributed environment comprising untrusted parties with quantum capabilities, utilizing a consensus algorithm to ensure the integrity of QRNG. Accordingly, there is a need for a distributed protocol for secure quantum random number generation, robust against node failure or malicious parties. The present disclosure describes solutions to alleviate or overcome one or more of the aforementioned problems, among others prevalent in conventional methods and systems.

**SUMMARY OF DISCLOSURE**

In accordance with aspects of the disclosure, there are provided systems and methods for generating a quantum random number using a distributed quantum network.

In accordance with an aspect of the disclosure, there is provided a method for generating a quantum random number (QRN), the method comprising: receiving from a plurality of nodes in a quantum network a plurality of initial quantum random numbers (IQRNs), wherein each initial quantum random number (IQRN) is generated by executing a quantum protocol between a first node and a second node comprised in the quantum network. Each IQRN may be associated with a first unique identifier (ID) uniquely identifying the first node, and a second unique identifier uniquely identifying the second node. The plurality of IQRNs may be analysed and a subset of the IQRNs that satisfy a consensus criterion may be retained. A QRN may be generated using the subset of retained IQRNs.

In accordance with at least some embodiments, the method may comprise: analysing each one of the plurality of IQRNs in accordance with a verification protocol, to identify a plurality of verified IQRNs, the plurality of verified IQRNs comprising each one of the plurality of IQRNs satisfying the verification protocol; and determining, based on the plurality of verified IQRNs and their associated first and second unique identifiers, the subset of IQRNs that satisfy the consensus criterion by retaining verified IQRNs associated with a subset of nodes of the quantum network that have generated a verified IQRN with each other node in the subset of nodes. This helps to reduce the risk that any of the retained IQRNs have been generated by nodes within the quantum network whose honesty, or security may have been compromised. For example, a node whose security has been compromised, for example by a malicious eavesdropper, is unlikely to generate a verified IQRN with each of the nodes that it has executed a quantum protocol with. Thus, by retaining the IQRNs generated by only the subset of nodes within the quantum network, that have generated a verified IQRN with each other node in the subset, helps to ensure that only those IQRNs generated by nodes whose security is uncompromised, are used to generate the quantum random number. This helps to ensure that the generated random number is truly random.

In accordance with at least some embodiments, the method may comprise: generating an adjacency matrix, using the plurality of verified IQRNs and the associated IDs, the adjacency matrix comprising a plurality of rows and columns, the number of rows and columns representing the plurality of nodes comprised in the quantum network, and each off-diagonal element of the adjacency matrix represents an outcome of the verification protocol corresponding to the IQRN generated by the first node associated with the row and the second node associated with the column; generating, using the adjacency matrix, a sub-matrix, wherein each off-diagonal element of the sub-matrix corresponds to a positive outcome of the verification protocol; and determining the subset of IQRNs, using the first and second IDs associated with each off-diagonal element of the sub-matrix to select the associated IQRN for each off-diagonal element.

The quantum protocol may comprise a quantum key distribution (QKD) protocol. Analysing each of the plurality of IQRNs in accordance with the verification protocol may comprise: analysing, for each one of the plurality of received IQRNs, if the IQRN associated with the first node obtained when executing the quantum protocol with the second node, corresponds with the IQRN associated with the second node obtained when executing the quantum protocol with the first node. The IQRN associated with the first node obtained when executing the quantum protocol with the second node may be communicated by the first node, and the IQRN associated with the second node obtained when executing the quantum protocol with the first node may be communicated by the second node. Use of a QKD protocol is advantageous since it is a random process, in that neither party to the protocol can anticipate what the resulting key will be. Therefore, the key generated via the QKD protocol may be used as an IQRN. The presence of an eavesdropper or other malicious observer reveals itself to the parties carrying out the QKD protocol by introducing an observable error rate in the protocol.

In embodiments in which the nodes are configured to execute a QKD protocol, the first node may be configured to send a plurality of quantum particles prepared in accordance with a set of bases to the second node, and the second node may be configured to measure the received one or more quantum particles in accordance with a randomly selected one of the set of basis. Analysing, for each one of the plurality of received IQRNs, if the IQRN associated with the first node, corresponds with the IQRN associated with the second node, may comprise: each one of the first and second nodes retaining bits associated with quantum particles where the second node measured the received quantum particle using the same basis that was used by the first node to prepare the quantum particles; each node generating its associated IQRN using the retained bits; and determining if the IQRN generated by the first node corresponds with the IQRN generated by the second node. The QKD protocol may comprise any one of: a BB84 protocol, a single-photon protocol, an E91 protocol, an entanglement-based protocol; a weak coherent state protocol.

In accordance with some embodiments, the quantum protocol may comprise an interactive proof of quantumness "IPQ" protocol; and analysing each of the plurality of IQRNs in accordance with the verification protocol may comprise: analysing, for each one of the plurality of received IQRNs, verification data reported by the first node and verification data reported by the second node. The IPQ protocol may comprise a Trapdoor Claw-Free "TCF" function. In some embodiments the IPQ protocol may comprise a lattice-based Learning With Errors "LWE" problem.

In accordance with some embodiments, the method may comprise: receiving from each one of the plurality of nodes, an outcome of a verification protocol associated with each received IQRN; and determining, based on the outcome of the verification protocol associated with each received IQRN and the first and second unique identifiers associated with each received IQRN, the subset of IQRNs that satisfy the consensus criterion, by retaining verified IQRNs associated with a subset of nodes of the quantum network that have generated a verified IQRN with each other node in the subset of nodes. The method may further comprise: generating an adjacency matrix, using each received verification protocol outcome, the adjacency matrix comprising a plurality of rows and columns, the number of rows and columns representing the plurality of nodes comprised in the quantum network, and each off-diagonal element of the adjacency matrix represents the received outcome corresponding to the IQRN generated by the first node associated to the row and the second node associated to the column; generating, using the adjacency matrix, a sub-matrix, wherein each off-diagonal element of the sub-matrix corresponds to a positive outcome of the verification protocol; and determining the subset of IQRNs using the first and second IDs associated with each off-diagonal element of the sub-matrix to select the associated IQRN for each off-diagonal element. The outcome of the verification protocol associated with each received IQRN may be generated by one of the first and second nodes.

In accordance with some embodiments generating the sub-matrix may comprise: removing rows and columns from the adjacency matrix that comprise a majority of off-diagonal elements representing a negative outcome of the verification protocol; and subsequently removing rows and columns that comprise at least one off-diagonal element representing a negative outcome of the verification protocol to generate the sub-matrix.

Generating the QRN may include combining the retained IQRNs in accordance with a mathematical operation. For example, the mathematical operation may comprise any one or more of: a non-entropy decreasing operation, an XOR bitwise operation, and/or aggregating the retained IQRNs.

The number of nodes in the quantum network may be equal to n, and the number of received IQRNs may be equal to $n(n-1)$.

The method may further comprise sending a request for the QRN. For example, the request may be sent from a user terminal to the quantum network.

In accordance with an aspect of the disclosure there is provided a system for a generating a quantum random number (QRN), the system comprising at least one processor, wherein the system is configured to perform the aforementioned method.

In accordance with a further aspect of the disclosure there is provided a system for generating a quantum random number (QRN). The system may comprise: a receiver for receiving from a plurality of nodes in a quantum network a plurality of initial quantum random numbers (IQRNs), wherein each initial quantum random number (IQRN) is generated by executing a quantum protocol between a first node and a second node comprised in the quantum network, and wherein each IQRN is associated with a first unique identifier (ID) uniquely identifying the first node, and a second unique identifier (ID) uniquely identifying the second node; a processor configured to: analyse the plurality of IQRNs and retain a subset of the IQRNs that satisfy a consensus criterion; generate the QRN using the subset of retained IQRNs.

In accordance with a further aspect of the disclosure there is provided a method for generating a quantum random number (QRN) by a first node in a quantum network comprising a plurality of other nodes. The method may comprise: executing a quantum protocol with each one of the plurality of other nodes, the output of each executed quantum protocol comprises an initial quantum random number (IQRN), each IQRN may be associated with a pair of unique identifiers (IDs), each pair of IDs comprising a first unique identifier uniquely identifying the first node, and a second unique identifier uniquely identifying a node of the plurality of other nodes executing the quantum protocol with the first node; and transmitting a first plurality of IQRNs obtained with each one of the plurality of other nodes enabling the QRN to be generated. The number of nodes in the quantum network may be equal to $n$, and a number of the first plurality of IQRNs may be equal to (n-1). The quantum protocol may comprise a QKD protocol, such as a BB84 protocol, a single-photon protocol, an E91 protocol, an entanglement-based protocol, or a weak coherent state protocol.

Executing the quantum protocol with each one of the plurality of other nodes, may comprise: preparing a plurality of quantum particles in accordance with a set of basis; sending the plurality of quantum particles to the other node via a quantum communication channel; receiving, from the other node, information indicative of the measurement basis used to measure each received quantum particle; discarding bits associated with quantum particles where the other node measured the quantum particle using the incorrect measurement basis, and generating the IQRN associated with the first node and the other node from the bits associated with the remaining quantum particles; and transmitting the IQRN with the pair of IDs associated with the first node and the other node.

Executing the quantum protocol with each one of the plurality of other nodes, may comprise: receiving, from the other node, via a quantum communication channel, a plurality of quantum particles prepared in accordance with a set of basis; measuring each one of the plurality of received quantum particles, using a randomly selected one of the set of basis; communicating information associated with the basis used to measure each received quantum particle to the other node; receiving from the other node information indicative of the quantum particles measured in the same basis as the other node; retaining a bit associated with each quantum particle measured in the same basis as the other node, and generating the IQRN using the retained bits; transmitting the IQRN with the pair of IDs associated with the first node and the other node.

In accordance with some embodiments, the method may further comprise: receiving from the plurality of other nodes, a second plurality of IQRNs, the second plurality of IQRNs having been generated by executing the QKD protocol between the first node and each one of the plurality of other nodes, and wherein each one of the second plurality of IQRNs may be associated with a pair of unique identifiers (IDs), each pair of IDs comprising a first unique identifier uniquely identifying a node of the plurality of other nodes executing the quantum protocol with the first node, and a second unique identifier uniquely identifying the first node; and wherein a number of nodes in the quantum network may be equal to n, and a number of the second plurality of IQRNs may be equal to (n-1).

The method may further comprise: analysing each of the first plurality of IQRNs in accordance with a verification protocol, to determine a first plurality of verified IQRNs; and transmitting the first plurality of verified IQRNs. Analysing each of the first plurality of IQRNs in accordance with the verification protocol, may comprise: analysing for each of the first plurality of IQRNs, if an IQRN associated with the pair of "IDs" comprising the first unique identifier uniquely identifying the first node and the second unique identifier uniquely identifying the node of the plurality of other nodes executing the quantum protocol with the first node, corresponds with an IQRN included in the second plurality of IQRNs associated with the pair of "IDs" comprising the first unique identifier uniquely identifying the node of the plurality of other nodes executing the quantum protocol with the first node the second unique identifier uniquely identifying the first node.

The method may further comprise: receiving from the plurality of other nodes, a second plurality of verified IQRNs, the second plurality of verified IQRNs having been determined by analysing each of the second plurality of IQRNs in accordance with the verification protocol.

The quantum protocol may comprise an interactive proof of quantumness (IPQ) protocol, and in some embodiments, the IPQ protocol may comprise a Trapdoor Claw-Free "TCF" function. In some embodiments, the IPQ protocol may comprise a lattice-based Learning With Errors (LWE) problem.

Executing the quantum protocol with each one of the plurality of other nodes, may comprise: receiving from each one of the plurality of other nodes a plurality of problem instances derived from a plurality of secret trapdoors; for each one of the plurality of received problem instances: executing, using a quantum circuit comprising an input register, an ancillary input register, an output register, an ancillary output register and a plurality of quantum gates, a quantum implementation of a TCF function generated from the problem instance; determining an IQRN by measuring the ancillary output register; sending the IQRN to the other node associated with the received problem instance; receiving from the other node information indicative of a random measurement basis; measuring the output register using the random measurement basis based on the received information.

The method may comprise: transmitting the first plurality of IQRNs obtained for each one of the plurality of problem instances, wherein each IQRN may be associated with the pair of IDs comprising the first unique identifier uniquely identifying the first node and the second unique identifier uniquely identifying the node of the plurality of other nodes executing the quantum protocol with the first node; and transmitting the plurality of measurement outcomes obtained for each one of the plurality of problem instances.

Executing the quantum protocol with each one of the plurality of other nodes, may further comprise: sending to each one of the plurality of other nodes a problem instance derived from a secret trapdoor; receiving from the plurality of other nodes, a second plurality of IQRNs, each one of the second plurality of IQRNs having been generated by one other node of the plurality of other nodes executing, using a quantum circuit comprising an input register, an ancillary input register, an output register and an ancillary output register, and a plurality of quantum gates, a quantum implementation of a TCF function constructed from the problem instance sent, and measuring the ancillary output register, and wherein each of the second plurality of IQRNs may be associated with a pair of unique identifiers "IDs" comprising the first unique identifier uniquely identifying the first node, and a second unique identifier uniquely identifying the one other node of the plurality of other nodes; sending to each one of the plurality of other nodes information indicative of a random measurement basis; receiving, from each one of the plurality of other nodes, a measurement outcome; sending the secret trapdoor, the plurality of measurement basis sent to the plurality of other nodes, and the plurality of measurement outcomes received from the plurality of other nodes; analysing the second plurality of IQRNs in accordance with a verification protocol, to determine a second plurality of verified IQRNs; and transmitting the second plurality of verified IQRNs.

Analysing the second plurality of IQRNs in accordance with the verification protocol, may comprise: analysing the second plurality of IQRNs based on the reported secret trapdoor, the plurality of measurement bases sent to the plurality of other nodes and the plurality of measurement outcomes received from the plurality of other nodes.

The method may further comprise: receiving from the plurality of other nodes a first plurality of verified IQRNs, wherein the first plurality of verified IQRNs having been determined by analysing the first plurality of IQRNs based on the plurality of secret trapdoors, the plurality of measurement bases from the plurality of other nodes and the plurality of measurement outcomes sent to the plurality of other nodes.

The method may further comprise: receiving from the plurality of other nodes, a third plurality of IQRNs, each one of the third plurality of IQRNs having been generated by executing a quantum protocol between a first one and a second one of the plurality of other nodes, and wherein each of the third plurality of IQRNs is associated with a pair of unique identifiers (IDs) uniquely identifying the first one and the second one of the plurality of other nodes. The number of nodes in the quantum network may be equal to $n$, and a number of the third plurality of IQRNs may be equal to (n-2)(n-1).

The method may further comprise: receiving from the plurality of nodes a third plurality of verified IQRNs, the third plurality of verified IQRNs having been determined by analysing each of the third plurality of IQRNs in accordance with the verification protocol.

In accordance with some embodiments the method may further comprise: determining, based on the first plurality of verified IQRNs, the second plurality of verified IQRNs, the third plurality of verified IQRNs and their associated unique identifiers, a subset of IQRNs that satisfy a consensus criterion by retaining verified IQRNs associated with a subset of nodes of the quantum network that have generated a verified IQRN with each other node in the subset of nodes.

In accordance with some embodiments the method may further comprise: generating an adjacency matrix, using the first plurality of verified IQRNs, the second plurality of verified IQRNs, the third plurality of verified IQRNs and the associated pairs of IDs, the adjacency matrix comprising a plurality of rows and columns, the number of rows and columns representing the plurality of nodes comprised in the quantum network, and each off-diagonal element of the adjacency matrix represents an outcome of the verification protocol corresponding to the IQRN generated by the first node associated to the row and the second node associated to the column; generating, using the adjacency matrix, a sub-matrix, wherein each off-diagonal element of the sub-matrix corresponds to a positive outcome of the verification protocol; and determining the subset of IQRNs compliant with the consensus criteria, obtained from the first plurality of IQRNs, the second plurality of IQRNs, and the third plurality of IQRNs using the IDs associated with each off-diagonal element of the sub-matrix to select the associated IQRN for each off-diagonal element. Generating the sub-matrix may comprise: removing rows and columns from the adjacency matrix that comprise a majority of off-diagonal elements representing a negative outcome of the verification protocol; and subsequently removing rows and columns that comprise at least one off-diagonal element representing a negative outcome of the verification protocol to generate the sub-matrix. The QRN may be generated using the subset of retained IQRNs, and the generated QRN may be transmitted to a remote entity requiring a QRN.

In accordance with a further aspect of the disclosure, there is provided a system for generating a quantum random number (QRN) in a quantum network comprising a plurality of nodes, the system being configurable in use as a node in the quantum network. The system may comprise: a processor; a quantum protocol module configured to execute a quantum protocol with each one of the plurality of nodes comprised in the quantum network, the output of each executed quantum protocol comprises an initial quantum random number (IQRN), each IQRN may be associated with a pair of unique identifiers (IDs), each pair of IDs comprising a first unique identifier uniquely identifying the system, and a second unique identifier uniquely identifying a node of the plurality of nodes executing the quantum protocol with the system; and a communication module configured to transmit a first plurality of IQRNs obtained with each one of the plurality of nodes, the first plurality of IQRNs enabling the QRN to be generated.

In accordance with embodiments in which the quantum protocol comprises a QKD protocol, and the quantum protocol module may comprise: a quantum particle source, enabling the generation of quantum particles; a quantum particle measurement device, enabling the detection of quantum particles; and wherein the communication module may comprise: a quantum channel enabling the transmission of quantum particles between the system and the plurality of nodes of the quantum network; and a classical communication channel enabling the transmission of data between the system and the plurality of nodes of the quantum network.

The quantum particle source may be configured to: prepare, a plurality of quantum particles in accordance with a set of bases. The communication module may be configured to: transmit, via the quantum channel, the plurality of quantum particles to another node in the quantum network; receive, from the other node, via the classical communication channel, information indicative of the measurement basis used to measure each received quantum particle. The processor may be configured to: discard bits associated with quantum particles where the other node measured the quantum particle using the incorrect measurement basis; and generate the IQRN associated with the first node and the other node from the bits associated with the remaining quantum particles. The communication module may be further configured to: transmit the IQRN with the pair of IDs associated with the system and the other node.

The communication module may be configured to receive, from another node in the quantum network, via the quantum communication channel, a plurality of quantum particles prepared in accordance with a set of bases. The quantum particle measurement device may be configured to measure each one of the plurality of received quantum particles, using a randomly selected one of the set of basis. The communication module may be further configured to: communicate, via the classical communication channel, information associated with the basis used to measure each received quantum particle to the other node; receive, from the other node, via the classical communication channel, information indicative of the quantum particles measured in the same basis as the other node; retain a bit associated with each quantum particle measured in the same basis as the other node. The processor may be configured to generate the IQRN using the retained bits, and the communication module may be configured to transmit the IQRN with the pair of IDs associated with the system and the other node.

The communication module may be configured to: receive from the plurality of other nodes, a second plurality of IQRNs, the second plurality of IQRNs having been generated by executing the QKD protocol between the node and each one of the plurality of other nodes, and wherein each one of the second plurality of IQRNs is associated with a pair of unique identifiers (IDs), each pair of IDs comprising a first unique identifier uniquely identifying an other node of the plurality of other nodes executing the quantum protocol with the system, and a second unique identifier uniquely identifying the system.

The processor may be configured to: analyse each of the first plurality of IQRNs in accordance with a verification protocol, to determine a first plurality of verified IQRNs; and the communication module may be configured to transmit the first plurality of verified IQRNs. The processor may be configured to: analyse for each of the first plurality of IQRNs if an IQRN associated with the pair of "IDs" comprising the first unique identifier uniquely identifying the system and the second unique identifier uniquely identifying the other node of the plurality of other nodes executing the quantum protocol with the system corresponds with an IQRN included in the second plurality of IQRNs associated with the pair of "IDs" comprising the first unique identifier uniquely identifying the other node of the plurality of other nodes executing the quantum protocol with the system and the second unique identifier uniquely identifying the system.

The communication module may be configured to: receive from the plurality of other nodes a second plurality of verified IQRNs, the second plurality of verified IQRNs having been determined by analysing each of the second plurality of IQRNs in accordance with the verification protocol.

In accordance with some embodiments, the quantum protocol may comprise an interactive proof of quantumness (IPQ) protocol, and the quantum protocol module may comprise: a quantum circuit comprising an input register, an ancillary input register, an output register, an ancillary output register and a plurality of quantum gates, wherein the input and ancillary input registers include mechanisms to initialize qubits and the output and ancillary output registers include measurement units to read qubits; and the communication module may comprise a classical communication channel enabling the transmission of data between the system and the plurality of other nodes of the quantum network.

In accordance with some embodiments, the IPQ protocol may comprise a Trapdoor Claw-Free "TCF" function and/or a lattice-based Learning With Errors "LWE" problem. The communication module may be configured to: receive from each one of the plurality of nodes via the classical communication channel a plurality of problem instances derived from a plurality of secret trapdoors; and for each one of the plurality of received problem instances, the processor may be configured to: execute, using the quantum circuit, a quantum implementation of a TCF function generated from the problem instance; determine an IQRN by measuring the ancillary output register; send the IQRN to the other node associated with the received problem instance; receive from the other node information indicative of a random measurement basis; measure the output register using the random measurement basis based on the received information.

**EP 4 708 025 A1**

The communication module may be configured to: transmit the first plurality of IQRNs obtained for each one of the plurality of problem instances, wherein each IQRN may be associated with the pair of IDs comprising the first unique identifier uniquely identifying the node and the second unique identifier uniquely identifying the other node of the plurality of other nodes executing the quantum protocol with the node; and transmit the plurality of measurement outcomes obtained for each one of the plurality of problem instances.

The communication module may be configured to: send to each one of the plurality of nodes, via the classical communication channel, a problem instance derived from a secret trapdoor; receive, from the plurality of other nodes via the classical communication channel, a second plurality of IQRNs, each one of the second plurality of IQRNs having been generated by one other node of the plurality of other nodes executing, using a quantum circuit comprising an input register, an ancillary input register, an output register, an ancillary output register and a plurality of quantum gates, a quantum implementation of a TCF function constructed from the problem instance sent, and measuring the ancillary output register, and wherein each of the second plurality of IQRNs is associated with a pair of unique identifiers (IDs) comprising a first unique identifier uniquely identifying each one of the other node of the plurality of other nodes and a second unique identifier uniquely identifying the system; send to each one of the plurality of other nodes via the classical communication channel, information indicative of a random measurement basis; receive from each one of the plurality of other network processors via the classical communication channel, a measurement outcome; report the secret trapdoor, information indicative of the plurality of measurement bases sent to the plurality of other nodes, and the plurality of measurement outcomes received from the plurality of nodes; analyse the second plurality of IQRNs in accordance with a verification protocol, to determine a second plurality of verified IQRNs; and report the second plurality of verified IQRNs.

In accordance with some embodiments, the processor may be configured to: analyse the second plurality of IQRNs based on the reported secret trapdoor, the plurality of measurement basis sent to the plurality of other nodes, and the plurality of measurement outcomes received from the plurality of other nodes.

The communication module may be configured to: receive from the plurality of other nodes a first plurality of verified IQRNs, wherein the first plurality of verified IQRNs having been determined by analysing the first plurality of IQRNs based on the plurality of secret trapdoors, the plurality of measurement bases from the plurality of other nodes and the plurality of measurement outcomes sent to the plurality of other nodes.

The communication module may be configured to: receive from the plurality of other nodes, a third plurality of IQRNs, each one of the third plurality of IQRNs having been generated by executing a quantum protocol between a first other node and a second other node of the plurality of other nodes, and wherein each of the third plurality of IQRNs is associated with a pair of unique identifiers "IDs" including a first unique identifier uniquely identifying the first other node, and a second unique identifier uniquely identifying the second other node.

The communication module may be configured to: receive from the plurality of other nodes a third plurality of verified IQRNs, the third plurality of verified IQRNs having been determined by analysing each of the third plurality of IQRNs in accordance with the verification protocol.

The processor may be configured to: determine, based on the first plurality of verified IQRNs, the second plurality of verified IQRNs, the third plurality of verified IQRNs and their associated first and second unique identifiers, a subset of IQRNs that satisfy a consensus criterion by retaining verified IQRNs associated with a subset of nodes of the quantum network that have generated a verified IQRN with each other node in the subset of nodes.

In accordance with some embodiments, the processor may be configured to: send a reward to each of the subset of nodes complying with the consensus criteria.

The system may be configured to: receive via the communication module a request for the QRN and determine one or more parameters for the quantum protocols in accordance with the received request.

In accordance with a further aspect of the disclosure, there is provided a quantum network enabling a quantum random number (QRN) to be generated, the quantum network comprising: a plurality of the aforementioned systems.

In accordance with yet a further aspect of the disclosure, there is provided a non-transitory medium, comprising computer-executable instructions. When executed on one or more processors, the computer-executable instructions configure the one or more processors to carry out any one of the aforementioned methods.

**BRIEF DESCRIPTION OF THE DRAWINGS**

Exemplary, non-limiting embodiments of the disclosure will be described with reference to the appended figures, in which:

FIG. 1A is a schematic illustration of an exemplary system configured for quantum random number generation, in accordance with some embodiments of the present disclosure;

FIG. 1B is a schematic illustration of an exemplary quantum random number generator, in accordance with some embodiments of the present disclosure;

FIG. 1C is an exemplary illustration of a register included in the quantum random number generator of FIG. 1B, in accordance with some embodiments of the present disclosure;

FIG. 2A is a flowchart of an exemplary process for quantum random number generation, in accordance with some embodiments of the present disclosure;

FIG. 2B is a flowchart of another exemplary process for quantum random number generation, in accordance with some embodiments of the present disclosure;

FIG. 2C is a flowchart of an exemplary process carried out for analysing a plurality of initial quantum random numbers, in accordance with some embodiments of the present disclosure;

FIG. 2D is a flowchart of another exemplary process carried out for analysing a plurality of initial quantum random numbers, in accordance with some embodiments of the present disclosure;

FIG. 2E is a flowchart of an exemplary process carried out for determining a subset of initial quantum random numbers, in accordance with some embodiments of the present disclosure;

FIG. 3A is an illustration of a matrix including a plurality of initial quantum random numbers, in accordance with some embodiments of the present disclosure;

FIG. 3B is an illustration of an initial graph determined in correspondence with a quantum consensus network, in accordance with some embodiments of the present disclosure;

FIG. 4A is an illustration of an adjacency matrix derived from the matrix of FIG. 3A, in accordance with some embodiments of the present disclosure;

FIG. 4B is an illustration of a compliant graph based on the initial graph of FIG. 3B, in accordance with some embodiments of the present disclosure;

FIG. 5A is an illustration of a process to determine an intermediary matrix from the adjacency matrix of FIG. 4A, in accordance with some embodiments of the present disclosure;

FIG. 5B is an illustration of a reduced compliant graph based on the compliant graph of FIG. 4B, in accordance with some embodiments of the present disclosure;

FIG. 6A is an illustration of a process to determine a sub-matrix with off-diagonal coefficients corresponding to positive outcomes from the intermediary matrix of FIG. 5A, in accordance with some embodiments of the present disclosure;

FIG. 6B is an illustration of a fully connected compliant graph based on the reduced compliant graph of FIG. 5B, in accordance with some embodiments of the present disclosure;

FIG. 7 is a schematic illustration of an exemplary quantum key distribution protocol between two nodes of a quantum consensus network, in accordance with some embodiments of the present disclosure;

FIG. 8 is a schematic illustration of an exemplary quantum circuit configured to perform interactive proof of quantumness protocols, in accordance with some embodiments of the present disclosure; and,

FIG. 9 is a schematic illustration of an exemplary interactive proof of quantumness protocol between two nodes of a quantum consensus network, in accordance with some embodiments of the present disclosure.

## DETAILED DESCRIPTION OF EMBODIMENTS

The following detailed description includes references to the accompanying drawings. Wherever possible, the same reference numbers are used in the drawings and the description to refer to the same or similar components and/or processes. While several illustrative embodiments are described herein, modifications, adaptations, and other implementations are possible. For example, substitutions, additions, or modifications may be made to the components illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope is defined by the appended claims.

## I. System Overview

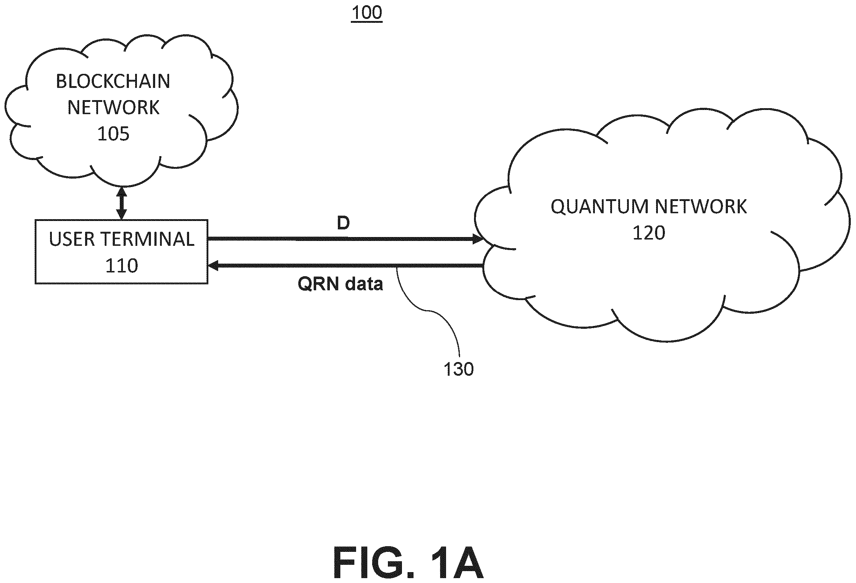

FIG. 1A is a schematic illustration of an exemplary system 100 configured for quantum random number generation, in accordance with embodiments of the present disclosure. System 100 comprises a user terminal 110, and a Quantum Network (QN) 120. In this context, user terminal 110 refers to any system, device, or entity that seeks to employ a Quantum Random Number (QRN) for various applications. For instance, user terminal 110 could utilize a QRN for tasks such as generating cryptographic keys, initiating computer simulations (e.g., Monte Carlo simulations or other randomized techniques), or participating in a blockchain network, such as blockchain network 105, through the execution of smart contracts. As user terminal 110 may lack quantum capabilities or the necessary quantum hardware for quantum random number generation, user terminal 110 may outsource quantum random number generation to QN 120. For example, in the scenario illustrated in FIG. 1A, user terminal 110 may submit a demand (D) via e.g., communication channel 130 for a QRN to QN 120 and, in return, receive a QRN or QRN data (i.e., data associated with one or more QRNs) generated based on the specified demand (D). The demand may include one or more criteria. For example, a demand may specify a range for the QRN, a length for the QRN, and/or a deadline before which the QRN needs to be produced and transmitted to user terminal 110. In some embodiments user terminal 110 may include a processor or a processing unit, a transmitter (e.g., configured to send the demand (D) via communication channel 130), and a receiver (e.g., configured to receive QRN data via communication channel 130).

In this context, a Quantum Network (QN) refers to any decentralized network comprising a plurality of nodes (or network processors) equipped with quantum capabilities and exchanging quantum information or information resulting from quantum experiments. For example, the nodes of QN 120 may possess quantum hardware (e.g., quantum computer, quantum processor, etc.) and/or may communicate with the other nodes of QN 120 through quantum communication channels. One of the objectives of QN 120 may be to achieve consensus regarding the generation of data, i.e., ensuring that the plurality of nodes come to an agreement or a shared understanding regarding the creation or generation of a specific piece of data. The goal of a consensus is to establish trust and reliability among the involved nodes by ensuring that the generated data is accepted and recognized. For instance, in line with the disclosed embodiment, QN 120 may comprise multiple nodes with quantum capabilities whose objective is to collectively agree on the generation of certifiable quantum random numbers, QRNs. Each node within QN 120 may be configured to conduct quantum random number generation experiments or protocols. In other words, harnessing quantum mechanical processes to generate random numbers. As used herein, quantum random number generation experiments or protocols refer to any method or process performed to generate random numbers using quantum mechanical phenomena. In quantum random number generation experiments, various quantum processes, such as the measurement of quantum states may be used to generate random outcomes. These outcomes may then be converted into random numbers. Examples of such experiments will be further detailed in subsequent sections. In certain embodiments, beyond merely receiving the demand (D), QN 120 may determine one or more parameters for quantum protocols performed by one or more nodes within QN 120. These parameters may be determined in accordance with, or as a function of, the specified demand (D). Further details regarding quantum random number generation experiments/quantum protocol parameters will be provided in subsequent sections.

In some embodiments, quantum protocols may be conducted by a pair of QN nodes with symmetric or asymmetric roles. In the case of a setup with symmetric roles, first and second nodes collaboratively engage in the generation of random numbers using quantum processes. After the random numbers are generated, the nodes may exchange them to ensure mutual verification and validate the integrity of the generated random sequences, i.e., ensuring that the random numbers have not been compromised by any external or unauthorized party, or tampered with by one of the nodes. Conversely, in a setup with asymmetric roles, a first node generates random numbers by carrying out a quantum experiment. These random numbers are then transmitted to a second node within the network for verification. This second node, acting as a verifier, assesses the authenticity of the generated random numbers (i.e., are the numbers resulting from a quantum experiment), and thus the trustworthiness of the first node. In both scenarios, whether involving symmetric or asymmetric roles, one of the objectives is to authenticate the generated random numbers, and establish the trustworthiness of the nodes. This verification process may serve as an initial step toward achieving a consensus.

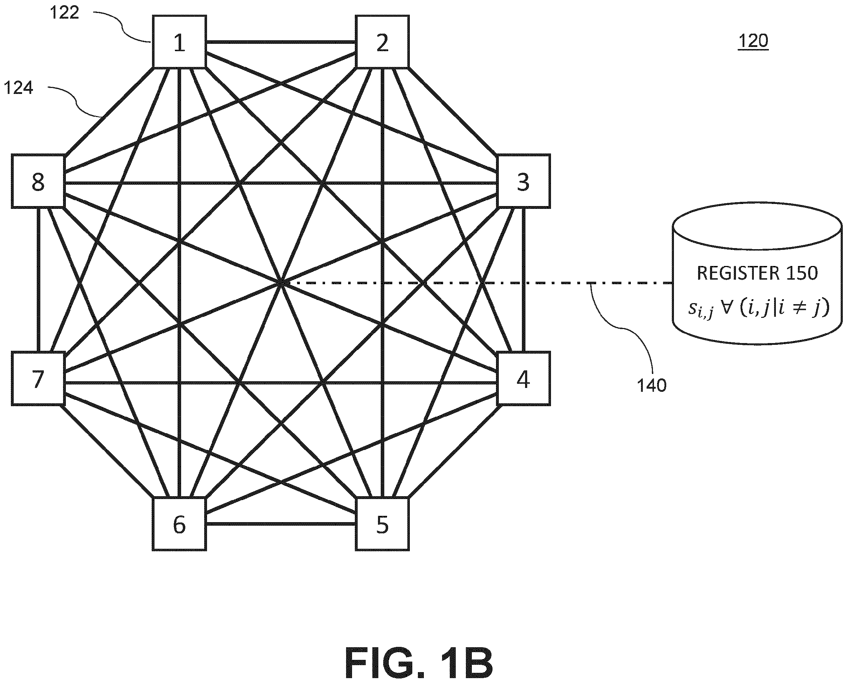

Following the execution of multiple quantum protocols across its nodes, QN 120 may then transmit QRN data. In this context, QRN data refers to any piece of information derived or obtained via the execution of one or more quantum protocols. QRN data may encompass one or more QRNs but also any additional data associated with their generation, transmission, and validation, such as metadata (e.g., QN 120 nodes IDs), or verification data/results. For instance, QRN data may encompass the entirety of data produced from all quantum protocols conducted by all QN 120 nodes. In some embodiments, QRN data may be public. For example, QRN data may be published in a register (e.g., register 150 shown in FIG. 1B) accessible to one or more parties, any QN 120 nodes, user terminal 110, and/or any other relevant parties. Utilizing this QRN data, a QRN that satisfies the specified demand (D), may be determined. In certain embodiments, the analysis of QRN data may facilitate reaching a consensus. Various operations may be conducted in conjunction with QRN data to obtain a QRN. For instance, one or more initial QRNs contained within the QRN data may be aggregated to generate a final QRN, and/or verification data within the QRN data may be analyzed to ascertain the authenticity of generated QRNs and the reliability of nodes comprised in QN 120. In some embodiments, verification, or more generally, analysis of the QRN data does not require any quantum capabilities, and any device with classical processing capabilities may be able to conduct the analysis. Referring to FIG. 1A, this may be the case for user terminal 110 which may receive QRN data alongside QRN or any QN 120 nodes.

In some embodiments, communication between user terminal 110 and QN 120 via communication channel 130 may be encrypted. Encrypted communication may be beneficial to avoid tampering or spoofing of the transferred QRN or QRN data by potential eavesdroppers, or malicious third parties, thereby guaranteeing the authenticity of the generated QRN. In scenarios wherein QRN data is public and/or transferred alongside QRN, user terminal 110 may be configured to conduct an independent verification analysis. For example, user terminal 110 may perform an analysis similar to the one performed by QN 120 and compare the QRN thereby obtained with the one received. As a result, any efforts to manipulate the generated QRN will be detected.

Although represented as separate entities for illustrative purposes in FIG. 1A, user terminal 110 may be a node in QN 120. In other words, in some embodiments, it is envisaged that one of the nodes comprised in QN 120 may also double as user terminal 110. For example, QN 120 may correspond to a blockchain network and may require QRNs to execute randomized blockchain algorithms or smart contracts. QN 120 may therefore act both as the producer and the consumer of QRNs.

In the preceding discussions, the generation of a QRN by QN 120 has been described as triggered by the receipt of a request (D) for a QRN. However, it is to be appreciated that in some embodiments QN 120 may operate autonomously, i.e., be capable of generating QRNs independently of external demands (D). Upon generation, these QRNs may be stored, e.g., in a register, within QN 120. When a request (D) for a QRN is received, QN 120 examines the criteria specified in the demand. It then selects a QRN from the stored pool that satisfies the requirements outlined in the demand (D) and transfers the selected QRN. This configuration offers several advantages, notably in reducing the latency between receipt of the demand, and the transfer of the QRN. By continuously generating and storing QRNs in advance, QN 120 can promptly respond to requests for QRNs without needing to first generate a new random number in response to each received request. This pre-generation and storage mechanism streamlines the process, ensuring that a suitable random number can be swiftly retrieved and transferred, minimizing any potential delay or latency in meeting the demand.

## II. The Quantum Network 120

FIG. 1B is an exemplary detailed schematic illustration of QN 120 of FIG. 1A. As illustrated, QN 120 comprises a plurality of networked nodes (interchangeably referred to as network processors) 122, all equipped with quantum capabilities. For example, nodes 122 may comprise quantum hardware (e.g., quantum computer, quantum processor, quantum protocol module, etc.), and/or may communicate with the other networked nodes of QN 120 through quantum communication channels. Additionally, in some embodiments, each of the plurality of nodes 122 may further comprise classical processing capabilities (e.g., nodes 122 may comprise a processing unit or processor). In the illustrated example of FIG.1B, QN 120 comprises eight nodes labelled "1" through "8", however, it is to be appreciated that any number of nodes greater than or equal to two may be comprised within QN 120. For example, QN 120 may include 10, 20, 50, 100, 1000, or any other number of nodes. Each node comprised in QN 120 may be uniquely identifiable. For example, via a unique identifier. Accordingly, and returning to the illustrated example, the labels "1" through "8" may correspond to the unique IDs associated with each node. The unique ID is a unique identifier that enables each node 122 to identify itself within QN 120. In some embodiments, the unique IDs may correspond to cryptographic keys, such as cryptographic public keys (i.e. each node may have a different unique cryptographic key that uniquely identifies it to the rest of the network). As shown, each node 122 may be connected to every other node of QN 120 by a plurality of communication channels 124. For instance, and as illustrated, node "1" is connected to nodes "2", "3", "4", "5", "6", "7" and "8" via communication channels 124. In addition, each node 122 may have access to register 150 through communication channel 140. Register 150, may be stored in a memory device accessible to QN 120. The memory device may be shared by all nodes 122, and/or each node 122 may store its own version of register 150.

In some embodiments, each node 122 may be configured to perform a quantum random number generation experiment with each other node comprised in QN 120. All communication channels 124 may operate in parallel to enable independent quantum protocols to be carried out between different nodes. The outcome of each quantum random number generation experiment may include an initial quantum random number IQRN. In the ensuing description, the IQRN obtained via the execution of a quantum random number generation protocol between node $i$ and node $j$, where $i$ and $j$ designate two different nodes or nodes ID ($i \neq j$), will be referred to as $s_{i,j}$. In some embodiments, an IQRN may take the form of a quantum random number bit-string (e.g., "10011010110"). Different formats are contemplated such as decimal, octal, or hexadecimal string, or any other format. Every quantum random number generation protocol may correspond to a two-node process. As mentioned above, quantum protocols may be symmetric, i.e., following execution, both nodes, if honest and if no errors occurred, hold two identical IQRNs, i.e., $s_{i,j} = s_{j,i}$ and for a pair of nodes, a single IQRN may ultimately be retained. However, as will be described in further detail below, both IQRNs ($s_{i,j}$, $s_{j,i}$) may be reported to enable a comparison of the two IQRNs to be made as part of a verification process. Alternatively, the executed quantum protocols may be asymmetric, in which case a first node, acting as a prover, may generate at least one random number based on quantum phenomena and/or a problem instance that requires quantum processing capabilities to be solved. This random number may then be transmitted to a second node acting as a verifier. For example, the prover (first node, node $i$) may produce an IQRN based on a problem instance specified by the verifier (second node, node $j$), the IQRN thus generated may then be classically verified based on a secret held by the verifier, i.e., the verifier with knowledge of the secret can certify that the generated IQRN is valid. In this context, valid means that the generated IQRN is a true QRN and represents a solution to the problem instance using quantum processing capabilities. Following this first execution, the roles may be exchanged, with the first node becoming the verifier and the second node becoming the prover. Accordingly, $s_{i,j}$ may differ from $s_{j,i}$, resulting in two IQRNs being generated for a single pair of nodes.

In some embodiments, the type of communication channels 124 may vary according to the quantum protocols performed. For example, communication channels 124 may correspond to classical communication channels (e.g., Ethernet, bus connections, cables, wireless connections, etc.). In some other embodiments, communication channels 124 may be quantum communication channels specifically designed to preserve the quantum properties of the transmitted information. In some embodiments, each communication channel 124 may include both a classical communication channel and a quantum communication channel.

After execution of the plurality of quantum protocols with each of the other nodes within QN 120, each node 122 may be configured to communicate (e.g., via a communication module) the resulting IQRNs. For example, each node 122, may communicate the IQRNs obtained with each of the other nodes 122 by publishing the IQRNs to a register, such as register 150 illustrated in FIG. 1B. In other scenarios, each node 122, may communicate the IQRNs directly to user terminal 110. If n denotes the total number of nodes 122, then after executing the plurality of quantum protocols with each of the other nodes within QN 120, at least $n(n-1)$ IQRNs may be communicated.

In some embodiments, the outcome of each quantum random number generation experiment may further include additional data. This additional data may comprise metadata (e.g., nodes 122 IDs, timestamps, etc.) or verification data/results. Accordingly in some embodiments, each node 122 may be further configured to communicate this additional data alongside the IQRN obtained with each of all the other nodes. Referring to FIG. 1A, QRN data may encompass the plurality of IQRNs and/or all the additional data obtained from the plurality of quantum protocols.

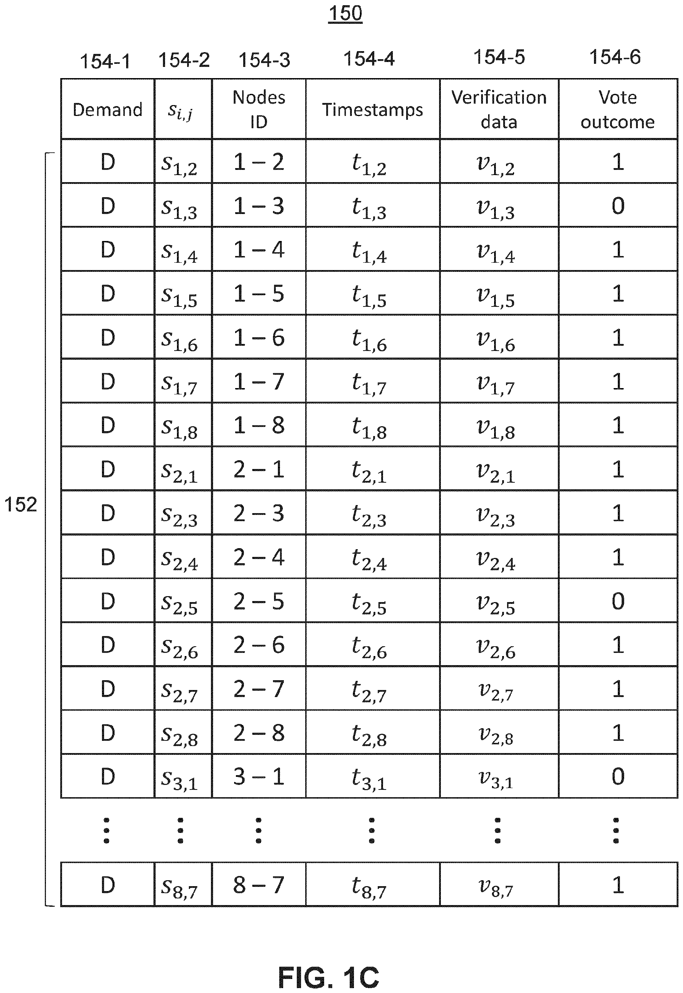

In some embodiments, the outcome of each quantum random number generation experiment and any additional data (e.g. QRN data) may be published in register 150 shown in FIG. 1B. FIG. 1C is an exemplary illustration of the structure of register 150 of FIG. 1B. As shown, register 150 may take the structure of a table. The table features multiple rows 152 each corresponding to a specific quantum random number generation experiment carried out between two nodes 122 of QN 120. Where QN 120 comprises 8 nodes 122, as illustrated in FIG. 1B, register 150 may include 56 different rows, each row referring to a quantum protocol executed between two nodes. Additionally, the table features multiple columns. Column 154-1 indicates which demand (D) the different quantum protocols have been carried out in response to, and columns 154-2 through 154-6 each correspond to specific types of data resulting from the executed quantum protocols. More specifically, column 154-2 represents the IQRN ($s_{i,j}$) resulting from each executed protocol, column 154-3 the IDs of the nodes 122 involved in each executed protocol, column 154-4 the timestamps ($t_{i,j}$) associated with the completion of each protocol, column 154-5 the verification data/results ($v_{i,j}$) associated with each protocol, and column 154-6 the vote outcomes following verification of each generated IQRN ($s_{i,j}$) (e.g., outcome of a verification protocol). Columns 154-1, 154-3, and 154-4 may represent metadata associated with each executed protocol.

In some embodiments, register 150 may also include a record of the history of all committed/communicated data by nodes 122. For instance, register 150 may contain all the IQRNs utilized for generating past QRNs in response to previous demands. For example, referring to FIG. 1C, the table structure of register 150 may further include 56 additional rows associated with a former demand $D_1$. Alternatively, register 150 may adopt the structure of a blockchain, providing a secure and immutable record of the QRN generation process. The content of each block may include a table similar to the one depicted in FIG. 1C alongside a hash of the previous block. In some other embodiments, register 150 might temporarily maintain the committed/communicated data by nodes 122, only retaining it until a final QRN is generated. This approach ensures that register 150 stores data for the duration necessary to complete the QRN generation process, after which it may be cleared or updated with new data as needed. For example, referring to FIG. 1C, the content of the table structure of register 150 may be cleared once the final QRN associated with demand $D$ is generated and transmitted to user terminal 110.

Once all data has been communicated, a distributed protocol for secure quantum random number generation may be performed to determine a final QRN to be transferred to a user requesting the QRN, such as user terminal 110, shown in FIG. 1A.

### III. Distributed protocol for secure quantum random number generation

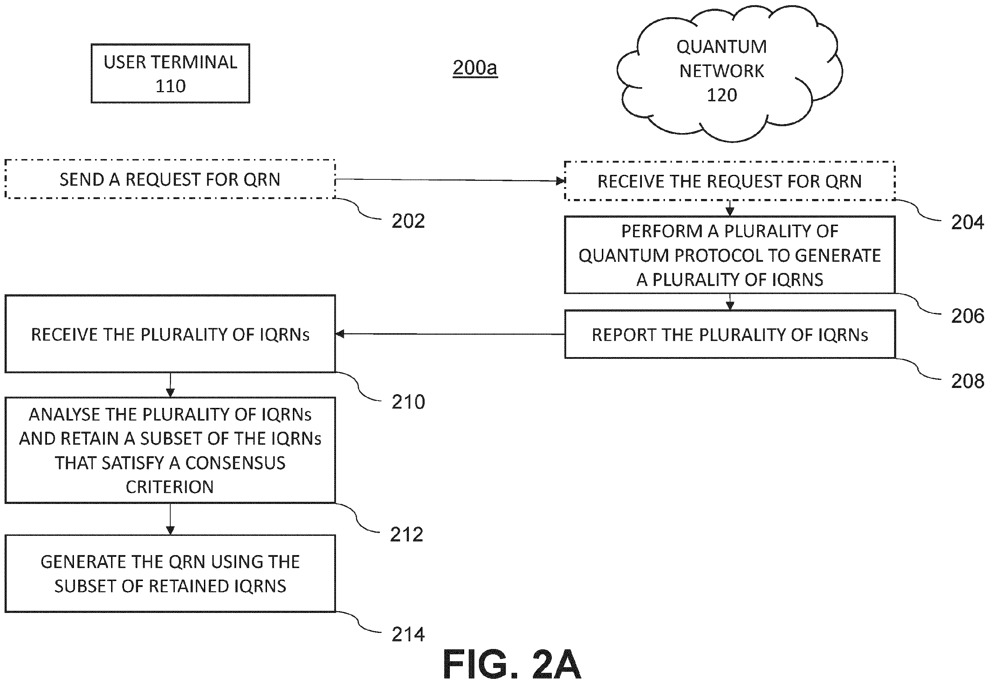

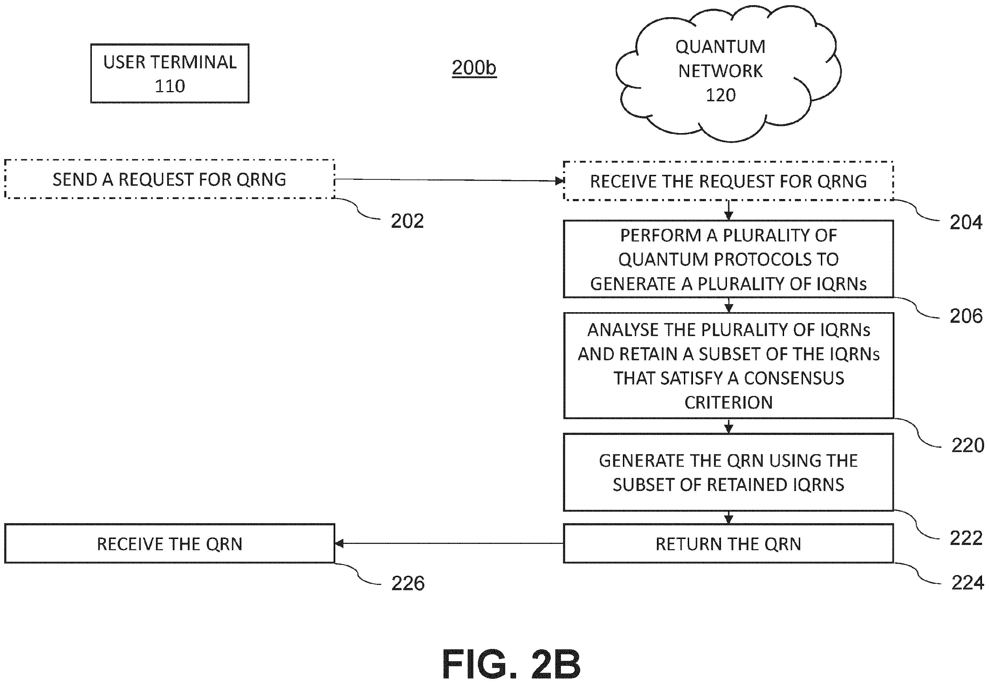

Various embodiments are considered in which the quantum protocols performed by QN nodes 122, requiring quantum capabilities, can be separated from the post-processing steps needed to generate QRNs, which only require classical processing capabilities. In some embodiments, these post-processing steps might be handled by an entity other than QN 120, such as user terminal 110. This configuration, illustrated in Fig. 2A, may help to reduce the workload on QN 120, preventing QN nodes 122 from being overwhelmed with classical processing tasks and allowing them to focus solely on quantum protocols. Alternatively, in other embodiments, both the quantum protocols and the post-processing steps are performed by QN nodes 122, as shown in Fig. 2B.

### A. Post-processing steps performed by user terminal 110

### 1. Overall process

FIG. 2A illustrates an exemplary process 200a for generating quantum random numbers. In accordance with the disclosed embodiments, such a process may include steps that are shared across user terminal 110 and QN 120 shown in FIGS. 1A-B. In this configuration, both user terminal 110 and QN 120 correspond to systems configured for generating a QRN.

Process 200a may start with an optional step 202, wherein user terminal 110, which may include a transmitter, sends a request or demand (D) for a QRN. From the perspective of QN 120, the request is received at step 204 (e.g., via the communication module of each QN node 122).

At step 206, quantum network 120 performs a plurality of quantum protocol to generate a plurality of IQRNs and then reports the plurality of IQRNs at step 208. Specifically, on a more granular level involving each node or network processor 122, each node (or system configurable in use as a node in the quantum network) includes a processor and a quantum protocol module configured to execute a quantum protocol with each one of the plurality of nodes comprised in the quantum network. The output of each executed quantum protocol comprises an initial quantum random number "IQRN" and each IQRN is associated with a pair of unique identifiers "IDs". Each pair of IDs comprises a first unique identifier uniquely identifying the system (i.e., the node), and a second unique identifier uniquely identifying a node of the plurality of nodes (i.e., another node) executing the quantum protocol with the system. Each node further includes a communication module configured to transmit a first plurality of IQRNs obtained with each one of the plurality of nodes, the first plurality of IQRNs enabling the QRN to be generated. If n denotes the total number of nodes 122, a number of the first plurality of IQRNs is equal to (n-1), i.e., a given node 122 is executing $(n-1)$ quantum protocol with the $n-1$ other nodes of QN 120.

User terminal 110 receives (e.g., via a receiver), at step 212 from the plurality of nodes 122 of QN 120 a plurality of IQRNs. As mentioned above, each IQRN is produced by performing a quantum protocol between a first node and a second node of QN 120. Each IQRN is associated with a first unique identifier "ID" uniquely identifying the first node, and a second unique identifier uniquely identifying the second node. Each node 122 of QN 120 is configured to perform a protocol with each of all the other nodes of QN 120 and communicate the IQRNs obtained as results. Different types of quantum protocols are presented in subsequent sections. If n denotes the total number of nodes 122 of QN 120, then the total number of IQRNs amounts to at least $n(n-1)$ IQRNs, i.e., each of the $n$ nodes is communicating a first plurality of IQRNs including n-1 IQRNs. Each node 122 may directly communicate their associated IQRNs to user terminal 110 and/or publish them on a register (e.g. register 150 illustrated in FIG. 1B) accessible to user terminal 110 thereby indirectly communicating the first plurality of IQRNs to user terminal 110.

In some embodiments, all generated IQRNs may be of equal length. For instance, each IQRN might be represented by a bitstring of consistent length, such as two, four, ten, hundreds, or any other number of bits. In cases where the lengths of the plurality of IQRNs vary, user terminal 110 might additionally be configured to analyse the IQRNs and standardize their sizes to match the smallest available length. For instance, if one IQRN corresponds to a twenty-bit bitstring and others to a twenty-five-bit bitstring, the user terminal 110 could truncate the additional five bits from each of the longer IQRNs, resulting in a set of IQRNs all with a length of twenty bits.

At step 212, user terminal 110 analyses the received plurality of IQRNs. Based on this analysis, user terminal 110 retains a subset of the IQRN that satisfy a consensus criterion. As used herein a consensus criterion refers to an agreed-upon set of rules that all nodes in QN 120 need to follow to ensure that the distributed protocol results in secure quantum random number generation. Details regarding the consensus criterion are further provided in subsequent sections. The subset of IQRNs may be associated with a subset of nodes complying with the consensus criteria. Accordingly, user terminal 110 may be further configured to determine a plurality of honest nodes amongst the plurality of nodes in QN 120. In this context, an honest node refers to a node that behaves in accordance with the rules and protocols of the network, without attempting to manipulate or disrupt the generation and transmission of random numbers. Honest nodes are expected to faithfully execute their assigned tasks, such as performing quantum protocols, communicating the results accurately, and/or participating in verification processes. The concept of honesty in QRNG networks ensures the integrity and security of the generated random numbers. Dishonest or malicious nodes may attempt to tamper with the random number generation process, introduce biases, or compromise the security of the network by colluding with adversaries. Therefore, the reliability and trustworthiness of the generated random numbers rely on the majority of nodes behaving honestly and adhering to the established protocols of QN 120. For a secure quantum random number generation, the number of honest nodes $n_h$ should be lower than or equal to the total number of nodes n but strictly greater than half of the total number of nodes $n12$, i.e., $n/2 < n_h \leq n$. If this condition is not met, the security of the process is compromised. In such cases, process 200a may be interrupted, and an alert may be issued.

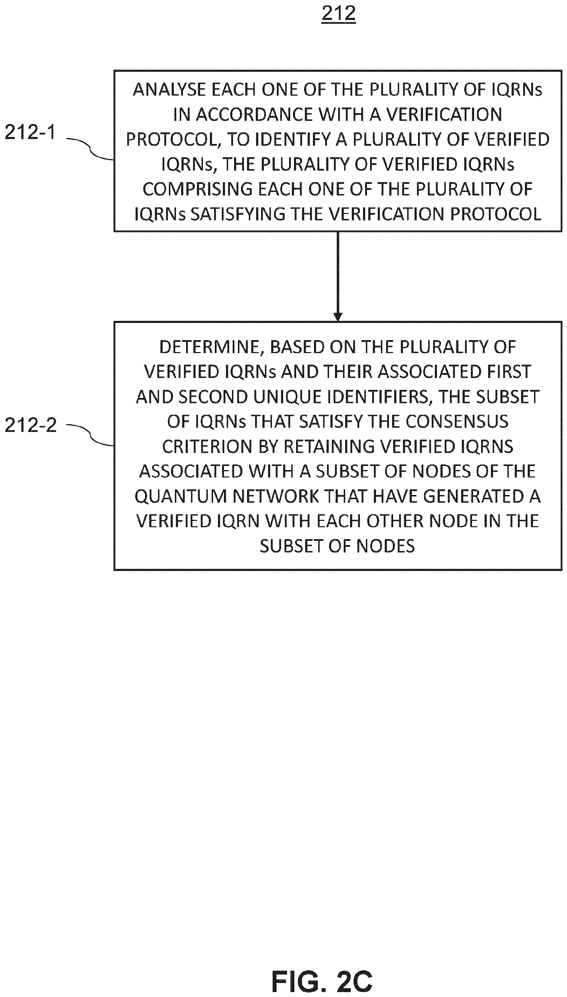

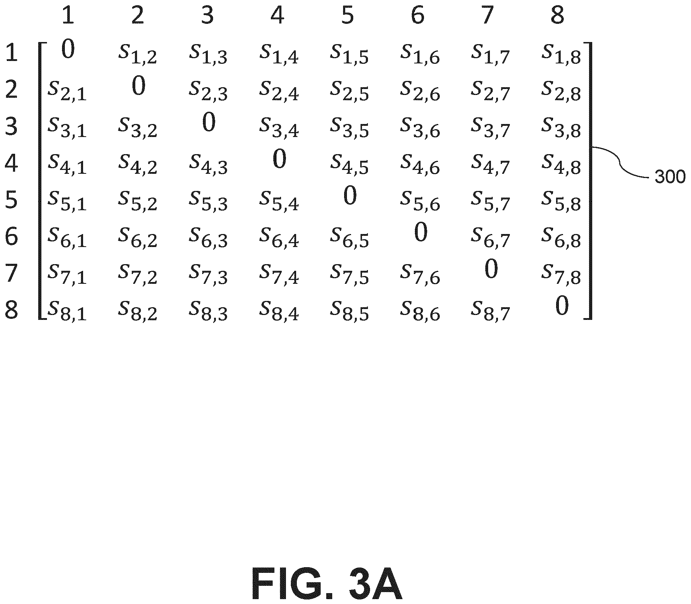

FIG. 2C illustrates the steps performed by user terminal 110 in accordance with some embodiments, comprised in the analysis of the plurality of IQRNs, at step 212 of FIG. 2A. The analysis may comprise analysing each one of the plurality of IQRNs in accordance with a verification protocol, to identify a plurality of verified IQRNs, the plurality of verified IQRNs comprising each one of the plurality of IQRNs satisfying the verification protocol, at step 212-1, followed by determining, based on the plurality of verified IQRNs and their associated first and second unique identifiers, the subset of IQRNs that satisfy the consensus criterion by retaining verified IQRNs associated with a subset of nodes of the quantum network that have generated a verified IQRN with each other node in the subset of nodes, at step 212-2. In this context, a node is considered connected to another node if the IQRN resulting from the quantum protocol executed between these two nodes passes the verification protocol with a positive outcome. To achieve consensus, each node must be connected to all other nodes, meaning the quantum network 120 should be fully connected. If certain IQRNs fail to pass the verification protocol (negative outcome), the quantum network 120 may need to be reduced by eliminating certain nodes. Consistent with the disclosed embodiments, nodes that are eliminated may be deemed dishonest and will not receive any reward for their participation in the quantum random number generation protocol. This ensures that only nodes contributing valid and verifiable IQRNs are considered in the final consensus, maintaining the integrity and reliability of the quantum networks. Details of how the analysis is performed in some embodiments are further described below in relation to FIGS. 3A-6B-D.

To improve the determination of the subset of IQRNs, in some embodiments, additional data such as verification data may be communicated by each node 122 of QN 120 and analysed alongside the plurality of IQRNs by user terminal 110. Moreover, additional data may be published in register 150 with the plurality of IQRNs.

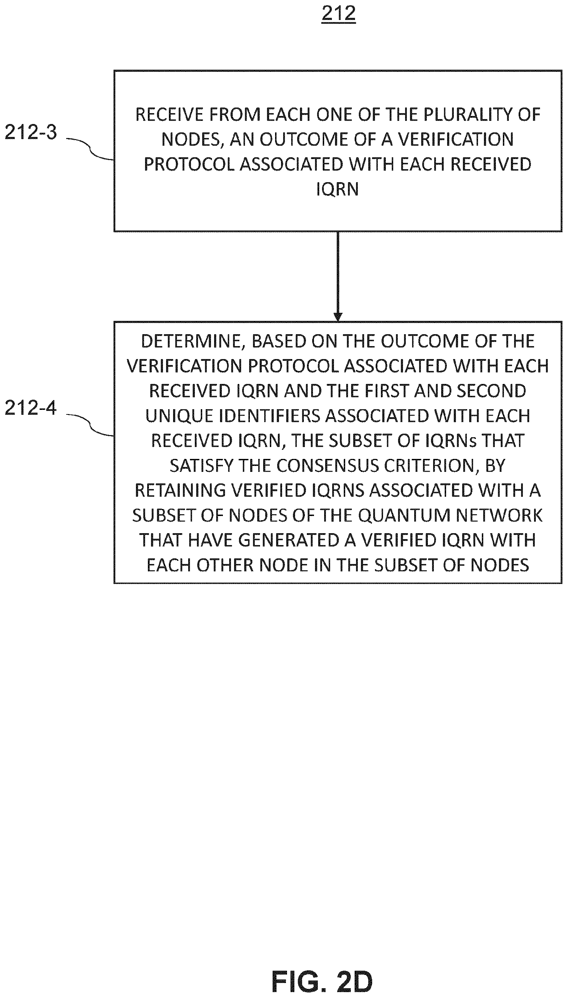

FIG. 2D illustrates the steps performed by user terminal 110 in accordance with some embodiments, comprised in the analysis of the plurality of IQRNs, at step 212 of FIG. 2A. The analysis may comprise receiving (e.g., via a receiver) from each one of the plurality of nodes, an outcome of a verification protocol associated with each received IQRN, at step 212-3, followed by determining, based on the outcome of the verification protocol associated with each received IQRN and the first and second unique identifiers associated with each received IQRN, the subset of IQRNs that satisfy the consensus criterion, by retaining verified IQRNs associated with a subset of nodes of the quantum network that have generated a verified IQRN with each other node in the subset of nodes, at step 212-4. Unlike the approach illustrated in FIG. 2C, in this scenario, the user terminal does not perform the verification protocol itself; instead, these verification protocols are executed by QN 120, which transmits the outcomes to user terminal 110. For example, in some embodiments, the outcome of the verification protocol associated with each received IQRN may be generated by one of the first and second nodes. This scenario can limit the amount of data exchanged between QN 120 and user terminal 110.

At step 214, user terminal 110 generates the (final) QRN using the subset of retained IQRNs. In some embodiments, generating the QRN may include combining the plurality of IQRNs included in the retained subset by a mathematical operation. In some embodiments, the mathematical operation may comprise aggregating the retained IQRNs. To maintain true randomness, the mathematical operation may be a strictly non-entropy decreasing operation, i.e., a mathematical operation for which under entropy addition rules, the resulting combination of IQRNs would have at least the same level of entropy of the individual IQRNs. The entropy of the QRN would therefore be lower bounded by the maximum entropy of the contributing IQRNs. Consequently, even in a scenario wherein only a single IQRN is a genuine QRN, the QRN would correspond to a true QRN. In some embodiments, the mathematical operation may correspond to an XOR bitwise operation. In which case,

$$\text{QRN} = {}^{n_h}_{i,j}\bigoplus s_{i,j} \qquad\qquad (1)$$

where QRN denotes the final QRN, nodes $i$ and $j$ are honest nodes (i.e., nodes associated with IQRNs in the retained set), and $s_{i,j}$ are IQRNs in the retained set. XOR bitwise operation is a logic operation for which the output is at logic 1 when one and only one of its inputs is at logic 1. Otherwise, the output is at logic 0. For example, if the following four six-bit strings are aggregated: "100110", "001011", "111001", "010101", under an XOR bit-wise operation the resulting final QRN bit string would be "000001". Alternatively, in some other embodiments, the mathematical operation may correspond to an XNOR bitwise operation. XNOR bitwise operation is a logic operation for which the output is at logic 0 when one and only one of its inputs is at logic 1. Otherwise, the output is at logic 1, similar to XOR but with inverted outputs.

In scenarios wherein quantum random number generation experiments (quantum protocols) are symmetric, i.e.,

following execution, both nodes, if honest and if no errors occurred, hold two identical IQRNs, i.e., $s_{i,j} = s_{j,i}$, only one version of the two identical IQRNs may be used during the aggregation process. For example, using an XOR bitwise operation for the aggregation, the final QRN is given by:

$$QRN = {}^{n_h}_{i}\bigoplus s_{i,i+1} \qquad\qquad (2)$$

**2. Analysis of the plurality of IQRNs and consensus criterion**

Before commencing the analysis of the plurality of IQRNs, user terminal 110 may optionally consolidate the received IQRNs. Given that the IQRNs originate from different nodes, user terminal 110 may arrange all received IQRNs into a structured format. In cases where QN nodes 122 directly transmit their IQRNs to user terminal 110, the latter can be configured to organize them in an ordered manner. For instance, user terminal 110 may arrange the received IQRNs into a table structure similar to the one depicted in register 150 as shown in FIG. 1C. User terminal 110 can relay the received IQRNs and store them in register 150 using the table structure alongside any received additional data. Alternatively, user terminal 110 may organize the IQRNs into a matrix structure such as the IQRN matrix 300a illustrated in FIG. 3A. IQRN matrix 300a encompasses all the distinct IQRNs resulting from the quantum protocols conducted among the nodes of QN 120. The coordinates within IQRN matrix 300a correspond to pairs of IDs associated with the IQRNs. For example, $s_{1,8}$, which represents the IQRN derived from the quantum random number generation experiment between Node 1 and Node 8, is situated at the intersection of the first row and eighth column within IQRN matrix 300a. As per convention, diagonal coefficients are assigned a value of zero, reflecting that QN 122 nodes are not set up to conduct a quantum protocol with themselves. However, alternative conventions are feasible, such as assigning a value of 1. In scenarios where all QN nodes 122 publish their IQRNs into register 150 as depicted in FIG. 1B, user terminal 110 may proceed to ensure that register 150 does not lack any data and/or reorganize the contents of register 150 into other structures more conducive to performing processing tasks, such as the IQRN matrix 300a.

The table structure and the matrix structure illustrated in FIG. 1C and 3A, respectively, are mere examples. Various other structural formats, such as structured lists or graphs, could be employed to organize and consolidate the received IQRNs. For example, user terminal 110 may determine an initial graph corresponding to QN 120, wherein each vertex in the initial graph is associated with a node 122, and each graph edge is associated with one of the plurality of IQRNs. A graph refers to a mathematical structure composed of vertices and edges. Vertices represent entities, and edges represent connections or relationships between these entities. In this context, vertices represent QN nodes 122 and edges the plurality of IQRNs obtained from quantum protocols performed by each pair of QN nodes 122. In a graph, each edge connects two vertices, and it can be directed or undirected, indicating whether the relationship is one-way or bidirectional.

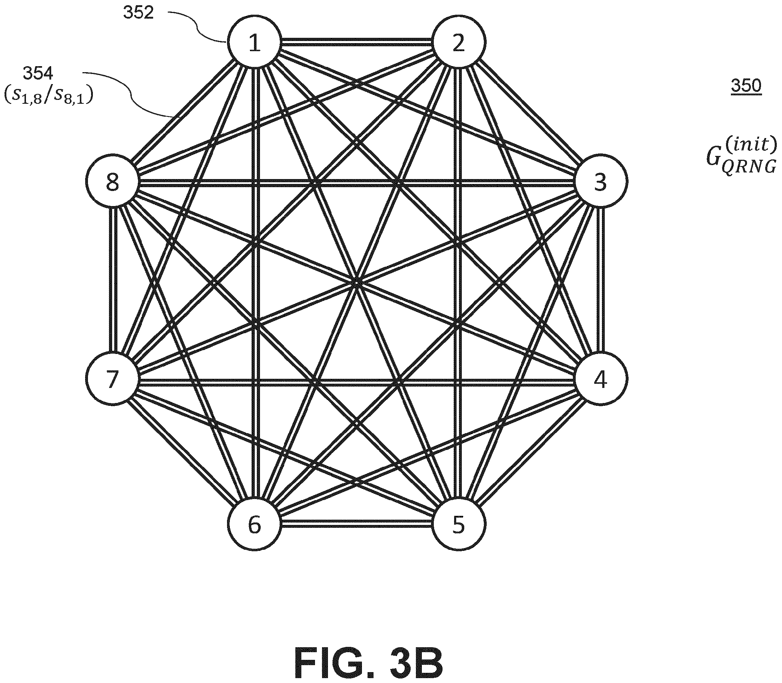

FIG. 3B illustrates an exemplary initial graph $G^{(init)}_{QRNG}$ 400a determined in correspondence with QN 120. As shown initial graph 350 includes a plurality of vertices 352, represented by circles, corresponding to QN 120 nodes 122. In this particular example, initial graph 350 includes eight vertices 352 labelled "1" through "8". As shown, each vertex 352 is connected to every other vertex by a plurality of edges 354, represented by black doubles continuous lines. For instance, vertex "1" is connected to vertices "2", "3", "4", "5", "6", "7" and "8" via edges 354. Each edge 354 is represented by a black doubled line since for any given node pair $(i,j)$, $s_{i,j}$ may differ from $s_{j,i}$. Even in scenarios wherein the quantum protocols are symmetric both IQRN $(s_{i,j}, s_{j,i})$ may be reported to enable comparison. When the IQRNs are published in a register, such as register 150 shown in FIG. 1B, user terminal 110 or any other entity having access to the register may determine initial graph 350 by observing the published data.

As mentioned previously, FIG. 2C is an exemplary process flowchart illustrating the steps comprised in analysing the plurality of IQRNs and retaining a subset of the IQRNs that satisfy a consensus criterion (step 212), as part of the process 200a depicted in FIG. 2A. User terminal 110 analyses and evaluates, at step 212-1, each of the plurality of IQRNs in accordance with a verification protocol. For a given IQRN $s_{i,j}$ the verification protocol, $f_v(s_{i,j}) \rightarrow \{0,1\}$ has a positive outcome ('true', '1') if $s_{i,j}$ passes a verification test, if $s_{i,j}$ is valid, otherwise the verification protocol has a negative outcome ('false', '0'). The specifics of this verification test are contingent upon the method used for the quantum protocol that resulted in $s_{i,j}$. Different verification protocols/tests are detailed in subsequent sections. In certain embodiments, the verification protocol may also accept verification data as input $v_{i,j}$. This verification data could be either received alongside the associated IQRN or published alongside the IQRN in register 150 for example. The outcome of the verification protocol may represent a vote of honesty of the nodes at the origin of the generated IQRN.

After this evaluation process, user terminal 110 may store the evaluated IQRNs in register 150. For example, referring to FIG. 1C, the table structure used in register 150, may further include a sixth column indicating if the IQRN of each row is associated with a positive or a negative outcome.

In the alternative scenario illustrated in Fig. 2D, user terminal 110 does not analyse the received IQRNs but instead receives the outcome of the verification protocol associated with each received IQRN, the verification protocol being performed by QN nodes 122. QN nodes may directly send the outcomes to user terminal 110 or publish them on register 150.

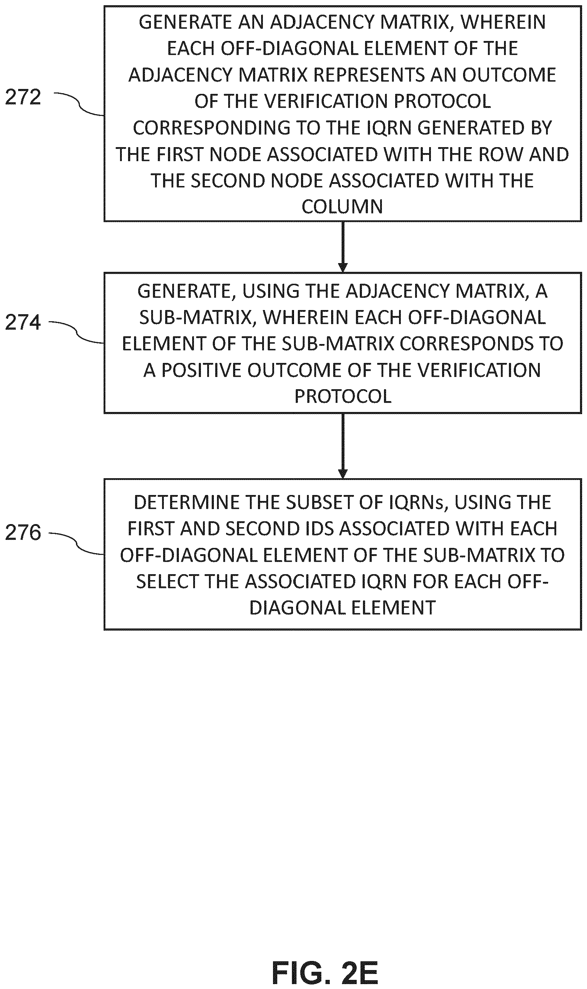

After the verification protocol is performed (by user terminal 110 or QN nodes 122) for each generated IQRN, user terminal 110 may determine based on the plurality of verified IQRNs / the outcome of the verification protocol associated with each received IQRN, and the first and second unique identifiers associated with each received IQRN, the subset of IQRNs that satisfy the consensus criterion. FIG. 2E illustrates the steps performed by user terminal 110 in accordance with some embodiments, comprised in the determination of the subset of IQRNs, at step 212-1 of FIG. 2C or at step 212-3 of FIG. 2D.

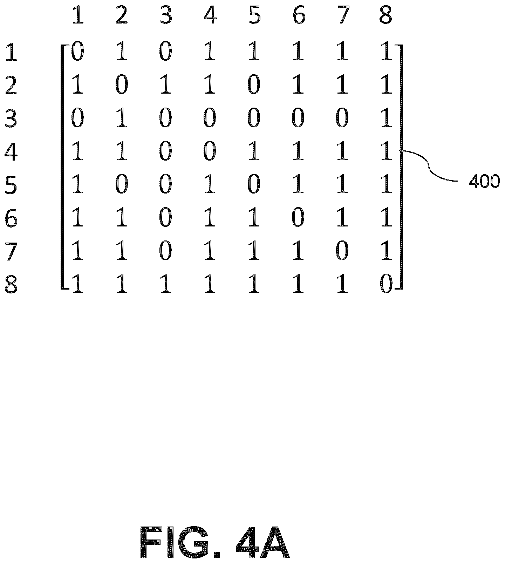

At step 272, user terminal 110 may generate an adjacency matrix, using the plurality of verified IQRNs and the associated IDs and/or each received verification protocol outcome. The adjacency matrix may comprise a plurality of rows and columns, the number of rows and columns representing the plurality of nodes comprised in the quantum network. Accordingly, in this context, the adjacency matrix may defined as a square matrix of dimensions $n \times n$, with $n$ the number of nodes in QN 120. Each off-diagonal element of the adjacency matrix may represent an outcome of the verification protocol corresponding to the IQRN generated by the first node associated with the row and the second node associated with the column. In other words, the matrix's coordinates may correspond to QN 120 nodes 122 ID and the coefficients to the outcomes of the evaluated IQRNs. FIG. 4A illustrates an exemplary adjacency matrix 400 derived from the plurality of evaluated IQRN and associated pairs of IDs. As shown adjacency matrix 400 corresponds to an $8 \times 8$ matrix, with coefficients corresponding either to zeros or ones and coordinates corresponding to QN 120 nodes 122 IDs. Adjacency matrix 400 may be obtained by evaluating each of the coefficients of IQRNs matrix 300 in accordance with a verification protocol $f_v$. In this example, IQRNs $s_{1,3}$, $s_{3,1}$, $s_{3,4}$, $s_{4,3}$, $s_{3,5}$, $s_{5,3}$, $s_{3,6}$, $s_{6,3}$, $s_{3,7}$, $s_{7,3}$, $s_{2,5}$, and $s_{5,2}$ evaluated as 'false' ('0', negative outcome), while the other IQRNs evaluated as 'true' ('1', positive outcome). As per convention, diagonal coefficients are assigned a value of zero, as non-existent IQRNs cannot be evaluated as true. Other conventions are possible.

Additionally, an adjacency matrix may be used to represent a finite graph. In an adjacency matrix, rows and columns represent the vertices of the graph and the entries/coefficients of the matrix indicate whether pairs of nodes are adjacent (connected by an edge) or not. An entry in row $i$ and column $j$ is '1' if there is an edge between node $i$ and node $j$ and '0' otherwise. Accordingly, step 272 is equivalent to determining a compliant graph for QN 120 based on the evaluated IQRNs, i.e., a graph with edge-inclusion based on the validity of the respective IQRN, i.e.,

$$G_{QRNG}^{(comp)}: e_{i,j} = f_v(s_{i,j}) \hspace{4cm} (3)$$

where $e_{i,j} = \{0,1\}$ denotes the absence/presence of a graph edge. The existence of edge $e_{i,j}$ acts as an implied vote by node $j$ for the honesty of node $i$. Accordingly, in some embodiments, determining a compliant graph for QN 120 may involve removing or eliminating edges from the initial graph for which the verification protocol of the associated IQRN results in a negative outcome.

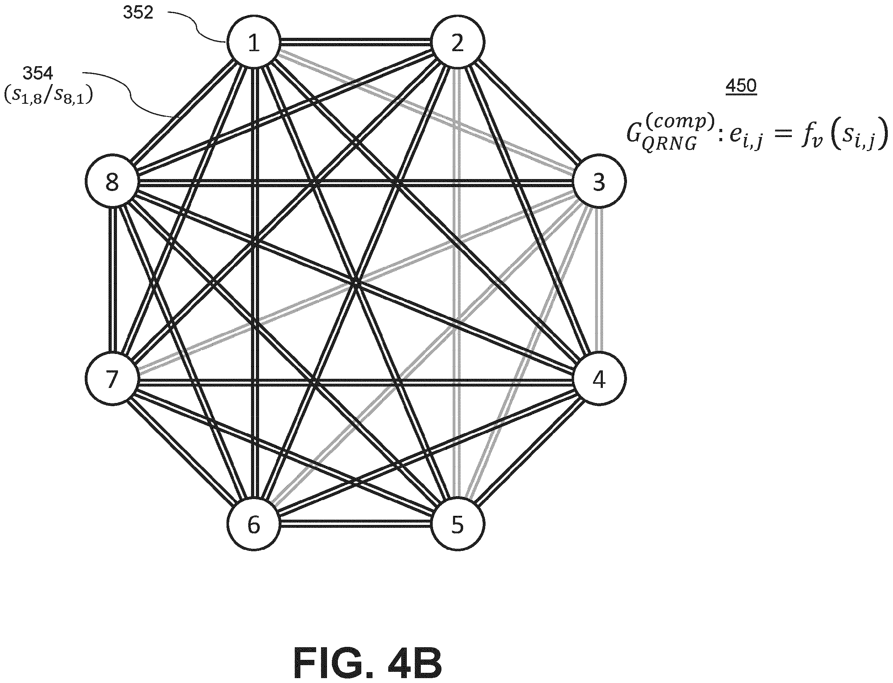

FIG. 4B illustrates an exemplary compliance graph $G_{QRNG}^{(comp)}$ 400b determined in correspondence with QN 120 and based on initial graph 350 shown in FIG. 3B. In compliance graph 450, as illustrated, several edges 354 have been removed, as indicated by faded double lines. These removed edges include those connecting vertex 3 to vertices 1, 4, 5, 6, and 7, as well as the edge between vertex 2 and vertex 5. As explained earlier, all of these edges were eliminated because of the negative outcome of the verification protocol $f_v$ of their respective IQRNs (i.e., $s_{1,3}$, $s_{3,1}$, $s_{3,4}$, $s_{4,3}$, $s_{3,5}$, $s_{5,3}$, $s_{3,6}$, $s_{6,3}$, $s_{3,7}$, $s_{7,3}$, $s_{2,5}$, and $s_{5,2}$).

At step 274, user terminal 110 may generate, using the adjacency matrix, a sub-matrix, wherein each off-diagonal element of the sub-matrix corresponds to a positive outcome of the verification protocol. A sub-adjacency matrix with ones on all the off-diagonal coefficients corresponds to a fully connected graph. Accordingly, step 274 is equivalent to determining a fully connected compliant graph by reducing the compliant graph. In some embodiments, the extraction/-generation of the sub-matrix from the adjacency matrix, and therefore the reduction of the compliant graph may involve two steps. The first step may correspond to removing rows and columns from the adjacency matrix that comprise a majority of off-diagonal elements representing a negative outcome of the verification protocol, thereby determining an intermediary matrix. This first step is equivalent to eliminating compliant graph vertices that are not connected by a majority of edges, i.e., nodes for which the majority of IQRNs have associated negative outcomes. Assuming the majority of QN nodes are honest, this process eliminates nodes not complying with the consensus protocol. For example, nodes who failed to execute the quantum protocol appropriately, nodes without the ability to execute quantum protocols, or nodes with malicious intent trying to spoof generated IQRNs. Dishonest nodes may collude to bypass execution of quantum protocols only amongst themselves, not against the QN as a whole. They cannot compromise the integrity of the protocol if they are in the minority.

After this first step, the resulting matrix may still include off-diagonal coefficients equal to zero, as certain rows and columns may possess coefficients equal to zero in minority. Put it differently, the reduced compliant graph $G_{QRNG}^{(red)}$ thereby obtained may still not be fully connected. For example, vertices with a minority of missing edges (removed in step 272) may still be present in the reduced compliant graph.

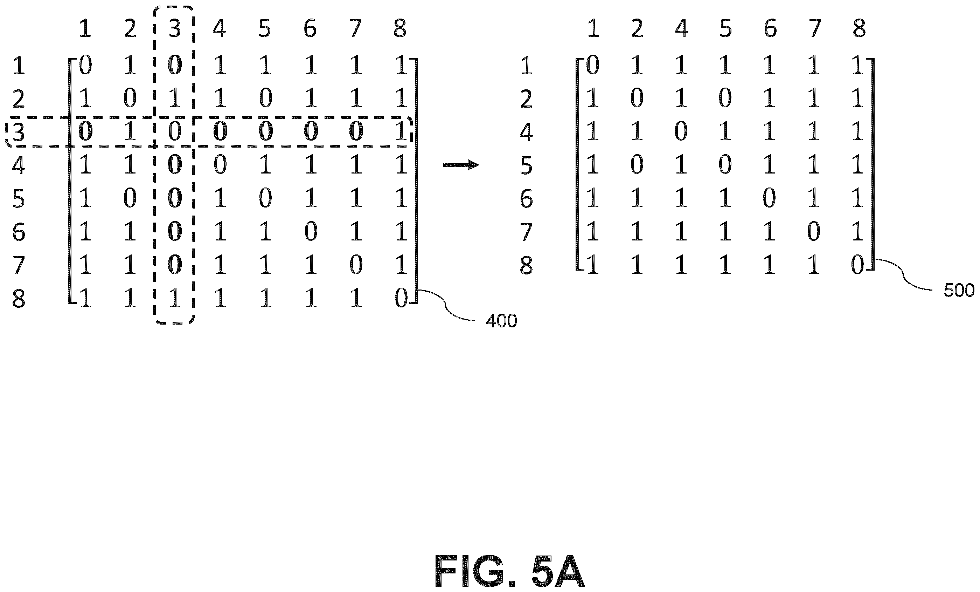

FIG. 5A illustrates, the first step in the extraction of the sub-matrix with ones on off-diagonal coefficients from the adjacency matrix 400. The resulting intermediary matrix 500 may still contain some off-diagonal coefficients equal to zero. In this initial step, rows and columns are eliminated based on their content of zeros. For instance, the third row and third column, corresponding to node ID '3', are eliminated due to the majority of zeros (indicated by bold emphasis). To determine which rows and columns to eliminate, user terminal 110 may calculate the sum of each coefficient along every row and column. If the sum is not equal to or greater than half of the dimension of the adjacency matrix (i.e., the number of nodes in QN 120), the corresponding row or column needs to be eliminated. However, if another convention is used where the diagonal coefficients are assigned a value of 1, the threshold for majority determination needs adjustment. In this case, the majority threshold would be set to half of the dimension of the adjacency matrix plus one. This ensures that a majority presence is still required for the inclusion of rows and columns, but accounts for the diagonal coefficients being considered as part of the majority.

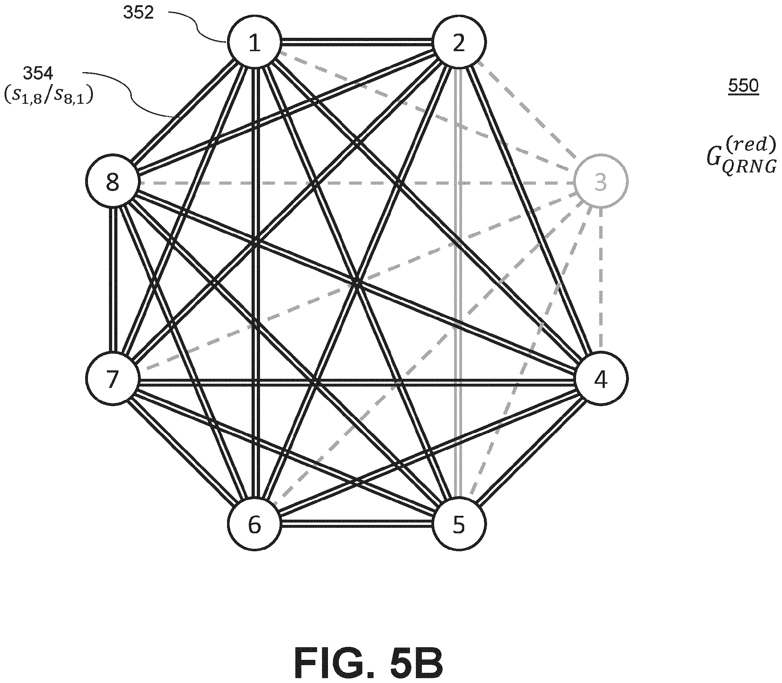

FIG. 5B illustrates a reduced compliant graph $G_{QRNG}^{(red)}$ 550 obtained by eliminating vertices from compliant graph 450 that were not connected by a majority of edges. In this example, vertex "3" (appearing faded) has been eliminated as five of the seven possible edges were eliminated during step 272 (therefore all edges associated with vertex "3" are now eliminated, indicated by faded dashed lines). Reduced compliant graph 550 is however not fully connected as the edge between vertex 2 and vertex 5 is missing.

The second step of the extraction of the sub-matrix may correspond to removing rows and columns that comprise at least one off-diagonal element representing a negative outcome of the verification protocol. This second step is equivalent to eliminating compliant graph vertices that are not connected by edges to every other vertex to determine a fully connected compliant graph. Vertices/nodes present in this graph unanimously vouch for one another's honesty. Vertices/nodes remaining in this subgraph are deemed honest and may receive an award in a monetized setting.

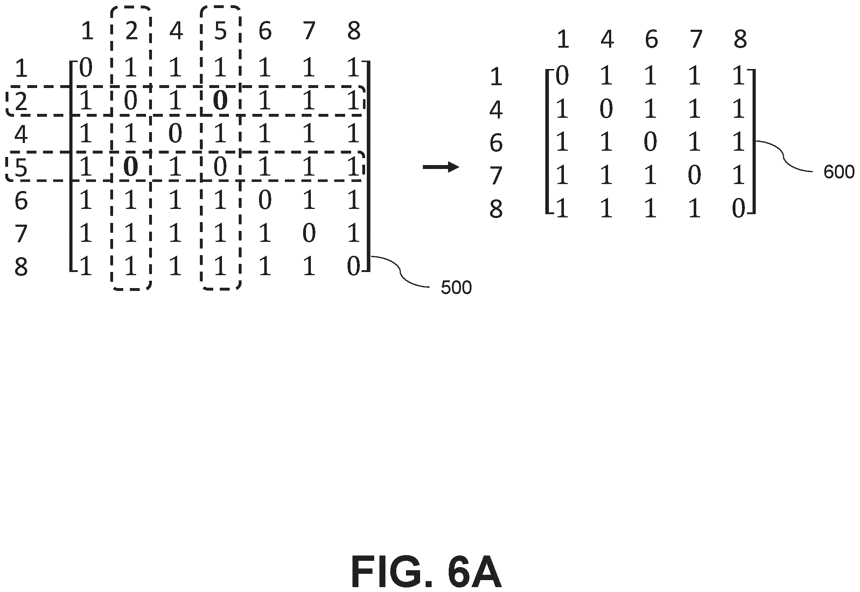

FIG. 6A illustrates the second step in the extraction of the sub-matrix with ones on off-diagonal coefficients from the adjacency matrix 400. In this second step, rows and columns of the intermediary matrix 500 are eliminated based on the presence of at least one off-diagonal coefficient equal to zero. In this example, the second and fourth rows/columns of the intermediary matrix 300c corresponding to nodes ID '2' and '5', are eliminated due to the presence of off-diagonal zeros (indicated by bold emphasis). To determine which rows and columns to eliminate, user terminal 110 may calculate the sum of each coefficient along every row and column. If the sum is not equal to the dimension of intermediary matrix 500 minus one, the corresponding row or column needs to be eliminated. However, if another convention is used where the diagonal coefficients are assigned a value of 1, the threshold for unanimity determination needs adjustment. In this case, the majority threshold would be set to the dimension of intermediary matrix 500.

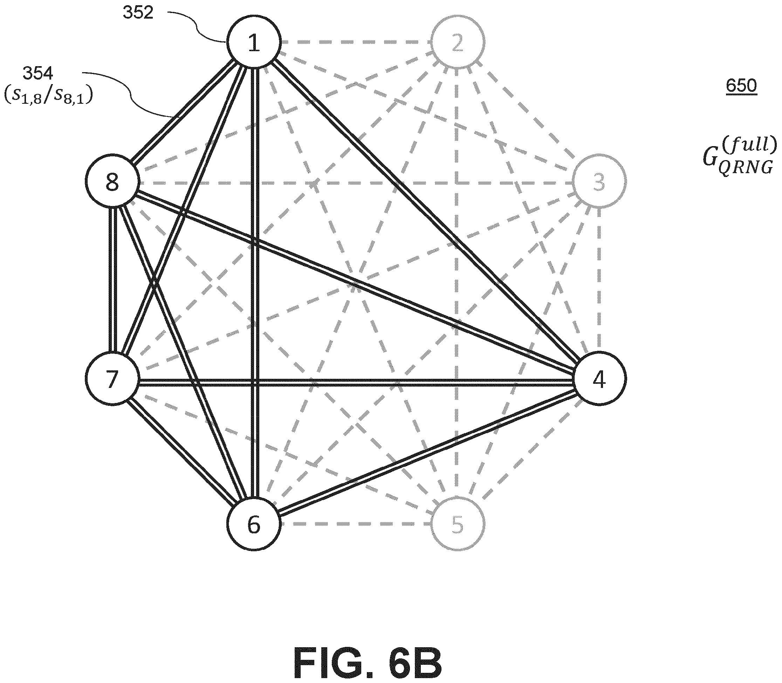

FIG. 6B illustrates a fully connected compliant graph $G_{QRNG}^{(full)}$ 650 obtained by eliminating vertices from reduced compliant graph 550 that were not connected by edges to every other vertex. In this example, vertices "2" and "5" (appearing faded) have been eliminated as their mutual edge was eliminated during step 274 (therefore all edges associated with these vertices are now eliminated, indicated by faded dashed lines).

At step 276, user terminal 110 may determine the subset of IQRNs, using the first and second IDs associated with each off-diagonal element of the sub-matrix to select the associated IQRN for each off-diagonal element. For example, referring to FIG. 6A, based on sub-matrix 600, the subset of IQRN corresponds to IQRN associated with nodes ID "1", "4", "6", "7", and "8", i.e., $\{s_{1,4}, s_{1,6}, s_{1,7}, s_{1,8}, s_{4,1}, s_{4,6}, s_{4,7}, s_{4,8}, s_{6,1}, s_{6,4}, s_{6,7}, s_{6,8}, s_{7,1}, s_{7,4}, s_{7,6}, s_{7,8}, s_{8,1}, s_{8,4}, s_{8,6}, s_{8,7}\}$. Using the fully connected compliant graph illustrated in FIG. 6B, only vertices "1", "4", "6", "7", and "8" are remaining. Their associated nodes are thus deemed honest and may receive a reward. In this example, only the IQRNs associated with these nodes will be retained in the subset and used to generate the (final) QRN. For example, using an XOR bitwise operation, the final QRN would, in this example, be given by:

$$\text{QRN} = \bigoplus_{i,j}^{\{1,4,6,7,8\}} s_{i,j} \qquad\qquad (4)$$

**B. Post-processing steps performed by QN 120**

**1. Overall process**

FIG. 2B illustrates an exemplary process 200B for generating quantum random numbers. In accordance with the disclosed embodiments, such a process may include only steps that are performed by QN 120 shown in FIGS. 1A-B. In this configuration, QN 120 corresponds to a system configured for generating a QRN, and user terminal 110 to a system configured to receive and use the QRN generated by QN 120. In the following, it is to be appreciated that when a step is referred to as being performed by QN 120, it includes both the situation where only one node of QN 120 is selected to perform this step and the situation where each node 122 within QN 120 may perform this step. A selected node may then exchange information with all other nodes of QN 120.

As for process 200a, process 200b may start with an optional step 202 wherein user terminal 110 which may include a transmitter sends a request or demand (D) for a QRN. From the perspective of QN 120, the request is received at step 204 (e.g., via the communication module of each QN node 122). In some embodiments, QN 120 may determine one or more parameters for the quantum protocols performed by each pair of QN 122 nodes in accordance with the received demand (D). For example, the demand (D) may specify a minimum length for the QRN, consequently, QN 120 may determine one or more parameters as a function of this minimum length, thereby ensuring that the demand will be met.

As for process 200a, at step 206 of process 200b, quantum network 120 performs a plurality of quantum protocols to generate a plurality of IQRN. If $n$ denotes the total number of nodes 122 of QN 120, then the total number of generated IQRNs amounts to at least $n(n-1)$ IQRNs.

At step 220, QN 120 analyses the plurality of IQRNs. Based on this analysis, QN 120 retains a subset of IQRNs that satisfy a consensus criterion. Whether the analysis of the plurality of IQRNs is performed by user terminal 110 as in process 200a or by QN 120 as in process 200b the consensus criterion remains the same and refers to an agreed-upon set of rules that all nodes in QN 120 need to follow to ensure that the distributed protocol results in secure quantum random number generation. Details regarding the consensus criterion are further provided in subsequent sections. The subset of IQRNs may be associated with a subset of nodes complying with the consensus criteria. Accordingly, QN 120 may be further configured to determine a plurality of honest nodes amongst the plurality of nodes in QN 120. As mentioned earlier, an honest node refers to a node that behaves in accordance with the rules and protocols of the network, without attempting to manipulate or disrupt the generation and transmission of random numbers.

In some embodiments, QN 120 may be further configured to send a reward to each honest node (i.e., of the subset of nodes complying with the consensus criterion). The distribution of rewards may be performed in accordance with a rewarding scheme. The rewarding scheme may involve a transaction fee, meaning that an entity requesting the QRN for subsequent use and transmitting an associated demand, such as user terminal 110, may be required to pay a fee. This fee could be incurred either upon the initial transmission of demand (D) or the transmission of the final QRN after achieving consensus. In some embodiments, the reward may be independent of the number of honest nodes (i.e., the number of nodes in the subset of nodes). Put differently, the reward may correspond to a flat per QN 120 node payoff. Since the number of nodes forming the final consensus (i.e., honest nodes) is variable, a reward scheme such that honest nodes receive an equal fraction of an initial transaction fee, would incentivize keeping the number of rewarded nodes to a minimum, which might be gamed by falsely excluding nodes. By offering a flat reward per node (effectively leading to a variable transaction fee), the false incentive for excluding nodes may be mitigated.

However, it is to be appreciated that alternative rewarding schemes could also be viable in different contexts. For example, in a situation wherein QN 1202 is the user of the final QRN, such as a blockchain network executing smart contracts requiring true random inputs, a fixed transaction fee might motivate nodes to uphold proper behaviours in anticipation of receiving their portion of the reward, even if they aren't selected for executing a smart contract. Alternatively, a rewarding scheme might involve penalties for nodes identified as dishonest-such as those failing to employ quantum hardware for generating random numbers when it's cost-effective or colluding with other nodes. Another approach could entail inviting nodes to stake tokens for participation in the quantum random number generation process, with the opportunity to receive a reward. In such cases, upon completion of the process, honest nodes would retrieve their staked tokens along with the reward, while dishonest nodes would forfeit their staked tokens.

At step 222, QN 120 generates the QRN using the subset of retained IQRNs. Once the final QRN is generated, QN 120 may transmit it to user terminal 110 for subsequent usage. In some embodiments, generating the QRN may include combining the plurality of IQRNs included in the retained subset by a mathematical operation. In some embodiments, the mathematical operation may comprise aggregating the retained IQRNs. To maintain true randomness, the mathematical operation may be a strictly non-entropy decreasing operation, i.e., a mathematical operation for which under entropy addition rules, the resulting combination of IQRNs would have at least the same level of entropy of the individual IQRNs. The entropy of the QRN would therefore be lower bounded by the maximum entropy of the contributing IQRNs. Consequently, even in a scenario wherein only a single IQRN is a genuine QRN, the QRN would correspond to a true QRN. In some embodiments, the mathematical operation may correspond to an XOR bitwise operation. Alternatively, in some other embodiments, the mathematical operation may correspond to an XNOR bitwise operation.

## 2. Analysis of the plurality of IQRNs and consensus criterion

In contrast to the scenario where user terminal 110 performs the analysis of the IQRNs-either by analysing each transmitted IQRN as in FIG. 2C or by receiving the outcome of a verification protocol for each IQRN as in FIG. 2D-not all generated IQRNs can be analysed by a given QN node 122 without data exchange between nodes. Initially, a given node 122 in QN 120 is only aware of the IQRNs it has helped generate through quantum protocols. Specifically, a node knows the first plurality of IQRNs it has transmitted, which is a subset of the overall plurality of IQRNs. If n represents the total number of QN nodes 122, this first plurality includes (n-1) IQRNs, while the total plurality includes n(n-1) IQRNs. Secondly, regardless of whether the quantum protocols used are symmetric or asymmetric, the node may receive a second plurality of IQRNs. These are IQRNs for which the node participated in the generation but did not transmit (i.e., the node was one of the first or second nodes performing the quantum protocol but did not transmit the IQRN). This second plurality also includes (n-1) IQRNs. Finally, the node may receive a third plurality of IQRNs, for which it did not participate in the generation of the quantum protocol. This third plurality includes (n-1)(n-2) IQRNs. Therefore, by considering the first, second, and third pluralities of IQRNs, a given node can have knowledge of the overall plurality of IQRNs, encompassing all generated IQRNs.

As mentioned earlier before commencing the analysis QN 120 may optionally consolidate the plurality IQRNs. For instance, QN 120 may arrange the IQRNs into a table structure similar to the one depicted in register 150 as shown in FIG. 1C, a matrix structure such as the IQRN matrix 300a illustrated in FIG. 3A, or an initial graph, such as initial graph 350 shown in FIG. 3B. Taking as an example the perspective of node '1' shown in Fig. 1B, the first plurality of IQRNs transmitted by node '1' includes the first row of IQRN matrix 300 (i.e., seven IQRNs). The second plurality of IQRNs for which node '1' has participated in the generating quantum protocol but did not transmit include the first column of IQRN matrix 300 (i.e., seven IQRNs). The third plurality includes all the other IQRNs (i.e., forty-two IQRNs).

As mentioned previously, each of the plurality of IQRNs may be analysed in accordance with a verification protocol. While any of the QN nodes 122 may include a processor and thus have the capacity to perform the analysis in accordance with a verification protocol, similar to user 110 in the scenario depicted in FIG. 2C, in some scenarios a given node may not analyze all the IQRNs. For example, in some embodiments, a given node may only analyze the IQRNs for which it has participated in the generating quantum protocol (e.g., the first plurality of IQRNs or the second plurality of IQRNs and thereby determine a first or a second plurality of verified IQRNs) and receive the outcomes of the verification protocol directly for the other IQRNs (e.g., third plurality of IQRNs, thereby determining a third plurality of verified IQRN). A node may transmit the plurality of verified IQRNs it has analyzed (e.g., first or second plurality of verified IQRNs) given node may store the IQRNs it has analysed and evaluated in register 150 and fetch the other evaluated IQRNs from register 150.

After the verification protocol is performed, QN 120 may determine based on a plurality of verified IQRNs (including a first plurality of verified IQRNs, a second plurality of verified IQRNs, and a third plurality of IQRNs), a subset of IQRNs that satisfy the consensus criterion by retaining verified IQRNs associated with a subset of nodes of the quantum network that have generated a verified IQRN with each other node in the subset of nodes.

For example, QN 120 may generate an adjacency matrix, using the plurality of verified IQRNs (including a first plurality of verified IQRNs, a second plurality of verified IQRNs, and a third plurality of IQRNs) and the associated pairs of IDs. The adjacency matrix may comprise a plurality of rows and columns, the number of rows and columns representing the plurality of nodes comprised in the quantum network. Accordingly, in this context, the adjacency matrix may defined as a square matrix of dimensions $n$ x $n$, with $n$ the number of nodes in QN 120. Each off-diagonal element of the adjacency matrix may represent an outcome of the verification protocol corresponding to the IQRN generated by the first node associated with the row and the second node associated with the column. In other words, the matrix's coordinates may correspond to QN 120 nodes 122 ID and the coefficients to the outcomes of the evaluated IQRNs. Akin to step 272 shown in FIG. 2E, QN 120 may generate an adjacency matrix similar to adjacency matrix 400 illustrated in FIG. 4A. Additionally, an adjacency matrix may be used to represent a finite graph. Accordingly, QN 120 may determine a compliant graph, such as compliant graph 450 shown in FIG. 4B.

QN 120 may then generate, using the adjacency matrix, a sub-matrix, wherein each off-diagonal element of the sub-matrix corresponds to a positive outcome of the verification protocol. In some embodiments, the extraction/generation of the sub-matrix from the adjacency matrix, and therefore the reduction of the compliant graph may involve two steps. The first step may correspond to removing rows and columns from the adjacency matrix that comprise a majority of off-diagonal elements representing a negative outcome of the verification protocol, thereby determining an intermediary matrix. Akin to step 274 shown in FIG. 2E, QN 120 may generate an intermediary matrix similar to intermediary matrix 500 illustrated in FIG. 5A. Furthermore, QN 120 may determine a reduced compliant graph, such as reduced compliant graph 550 shown in FIG. 5B.

After this first step, the resulting matrix may still include off-diagonal coefficients equal to zero, as certain rows and columns may possess coefficients equal to zero in minority. Put it differently, the reduced compliant graph thereby obtained may still not be fully connected. For example, vertices with a minority of missing edges may still be present in the reduced compliant graph.

The second step of the extraction of the sub-matrix may correspond to removing rows and columns that comprise at least one off-diagonal element representing a negative outcome of the verification protocol. This second step is equivalent to eliminating compliant graph vertices that are not connected by edges to every other vertex to determine a fully connected compliant graph. Vertices/nodes present in this graph unanimously vouch for one another's honesty.

Vertices/nodes remaining in this subgraph are deemed honest and may receive an award in a monetized setting. Akin to step 276 shown in FIG. 2E, QN 120 may generate a sub-matrix similar to sub-matrix 600 illustrated in FIG. 6A. Furthermore, QN 120 may determine a fully connected compliant graph, such as fully connected compliant graph 650 shown in FIG. 6B.

After generating the sub-matrix, QN 120 may determine the subset of IQRNs, using the first and second IDs associated with each off-diagonal element of the sub-matrix to select the associated IQRN for each off-diagonal element. For example, referring to FIG. 6A, based on sub-matrix 600, the subset of IQRN corresponds to IQRN associated with nodes ID "1", "4", "6", "7", and "8", i.e., $\{s_{1,4}, s_{1,6}, s_{1,7}, s_{1,8}, s_{4,1}, s_{4,6}, s_{4,7}, s_{4,8}, s_{6,1}, s_{6,4}, s_{6,7}, s_{6,8}, s_{7,1}, s_{7,4}, s_{7,6}, s_{7,8}, s_{8,1}, s_{8,4}, s_{8,6}, s_{8,7}\}$. Using the fully connected compliant graph illustrated in FIG. 6B, only vertices "1", "4", "6", "7", and "8" are remaining.

## IV. Hardware implementations

### A. Quantum Key Distribution (QKD) protocols

#### 1. Protocol

In accordance with some embodiments of the present disclosure, quantum protocols performed between a first node and a second node of a QN, such as QN 120 illustrated in FIGS. 1A-B may be analogous to Quantum Key Distribution (QKD) protocols. QKD protocols refer to methods of securely sharing encryption keys between two parties, typically referred to as Alice and Bob, based on the principles of quantum mechanics. QKD protocols utilize properties of quantum physics, such as the uncertainty principle and the no-cloning theorem, to establish secure communication channels. The fundamental idea behind QKD is that any attempt to eavesdrop or intercept quantum-encoded information would inevitably disturb the quantum state, thus alerting the communicating parties to the presence of a third (malicious) party. This allows for the creation of encryption keys that are inherently secure against eavesdropping attacks. QKD protocols include various techniques such as BB84 protocol, single-photon protocols, E91 protocol, entanglement-based protocols, weak coherent state protocols, B92 protocols, or continuous variables protocols, each with its own approach to quantum encoding and key distribution. Despite their historical use in generating secret encryption keys, the outcome of QKD protocols effectively results in a Quantum Random Number (QRN). When integrated into a QN, QKD protocols have the potential to produce multiple QRNs, or as mentioned earlier, a plurality of Initial Quantum Random Numbers (IQRNs), which can then be verified and used to derive a final QRN in accordance with process 200a and 200b illustrated in FIGS. 2A-B.

In terms of hardware implementations, QKD protocols do not necessitate a quantum computer specifically. Instead, they rely on quantum communication channels enabling the transmission of quantum particles between two parties equipped to emit (i.e., including a quantum particle source enabling the generation of quantum particles) and/or collect and measure quantum particles (i.e., including a quantum particle measurement device enabling the detection of quantum particles), such as single-photon sources/measuring unit. In reference to FIG. 1B, if QN 120 incorporates nodes capable of executing QKD protocols with all other nodes, each communication channel 124 corresponds to a quantum communication channel, while nodes 122 represent setups capable of emitting and/or measuring quantum states. In addition, each node 122 may include a processor, and each communication module included in QN nodes 122, in addition to the quantum channel may include a classical communication channel enabling the transmission of data.

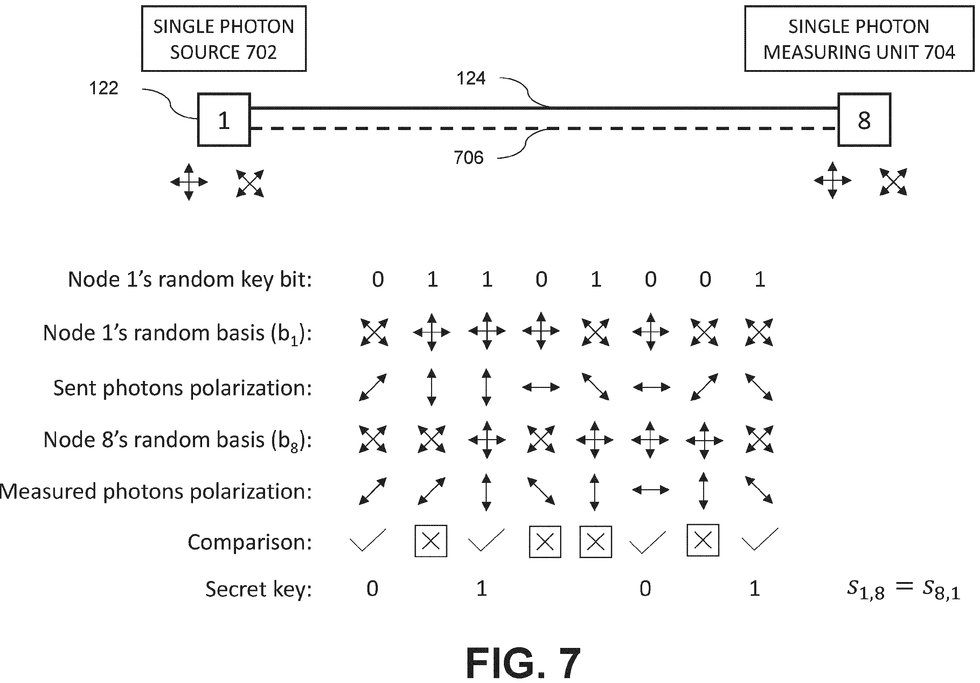

FIG. 7 is an illustration of an exemplary QKD protocol between two nodes 122 of QN 120 shown in FIGS. 1A-B. More specifically, FIG. 7 illustrates how a BB84 protocol between node '1' and node '8' may lead to the generation of IQRNs $s_{1,8}/s_{8,1}$. In this protocol, every bit of the secret key is encoded into the polarization state of a single photon. Because the polarization state of a single photon cannot be measured without destroying the photon, this information will be 'fragile' and not available to an eavesdropper (also referred to as Eve). Any eavesdropper will have to detect the photon, and therefore then will either reveal itself or will have to re-send this photon. But then the eavesdropper will inevitably send a photon with a wrong polarization state. This will lead to errors, and again the eavesdropper will reveal herself.

The protocol operates as follows: Node '1' using the quantum particle source (e.g., single-photon source 702) prepares, a plurality of quantum particles in accordance with a set of basis. Using a linear polarization basis (depicted as a plus sign cross), Node '1' encodes zeroes into H-polarized photons (illustrated as horizontal double arrows) and ones into V-polarized photons (shown as vertical double arrows), but only in half of the cases. The remaining half of bits, chosen randomly, are encoded using a diagonal polarization basis (depicted as a 45-degree tilted cross). In this case, the 'D' polarization (represented as double arrows with a 45-degree shift) corresponds to zero, and the 'A' polarization (represented as double arrows with a 135-degree shift) corresponds to one. Node '1' then transmits via the quantum channel 124, the plurality of quantum particles to Node '8' (i.e., another node in QN 120).

Node '8' receives from node 1 via quantum communication channel 124 the plurality of quantum particles prepared in accordance with the set of bases and measures each one of the plurality of received quantum particles, using a randomly selected one of the set of bases using a quantum particle measurement device such as single photon measuring unit 704 capable of discerning different single-photon polarizations. This enables Node '8' to distinguish between H and V polarizations when he uses the linear polarization basis. However, in half of the instances, Node '8' randomly switches its basis to the diagonal polarization basis. After a certain number of bits have been transmitted, and all photons have been detected and eliminated, Node '8' communicates (e.g., via the communication module and classical communication channel 706) information associated with the basis used to measure each received quantum particle to the other node, i.e., node '8' publicly declares which basis he used for each bit. Node '1' receives from node 8, the information indicative of the measurement basis used to measure each received quantum particle. Node '1' then reveals in which cases they used the same bases such information is received by node '8'. Nodes '1' and '8' (via their processor) discard the bits where they used different bases and retain only those where they used the same basis and generate the IQRN using the retained bits (i.e., bits associated with the remaining quantum particles). This process, also known as key sifting or basis reconciliation, reduces the length of the key by half (on average). However, the remaining bits are random and should match for Node '1' and Node '8' if no errors occurred or no eavesdropper intercepted the communication. In other words, the random sequence of bits sent/encoded by Node '1' $s_{1,8}$, should be equal to the random sequence of bits measured by Node '8' $s_{8,1}$.

FIG. 7 represents an example of transmitting 8 bits of a secret key. After the key shifting process, only 4 bits are left and $s_{1,8}$ = $s_{8,1}$. After the IQRNs are generated, nodes '1' and '8' transmit the IQRN with the pair of IDs associated with node '1' and node '8'. In some embodiments, the IQRN communicated by node '1' (i.e. $s_{1,8}$) may be associated with node '1' and form part of the first plurality of IQRN transmitted by node '1', the IQRN communicated by node '8' (i.e. $s_{8,1}$) may be associated with node '8' and form part of the first plurality of IQRN transmitted by node '8'.

Single photon source 702 encompasses any devices capable of emitting single photons. These sources can include single atoms, molecules, NV centres in diamonds, or quantum dots, among others. However, these sources typically do not provide photons on demand. Instead, their emission is probabilistic, meaning that there is a certain probability of emitting a single photon upon excitation. Another type of source utilizes weak coherent states, such as a femtosecond laser coupled to a nonlinear crystal. In this configuration, the laser emits pulses with a mean photon number per pulse below unity, ensuring that, on average, less than one photon is emitted per pulse. By operating in this regime, the source can produce single photons with controllable probabilities. In order to modify the polarization, the emitted single-photons, single-photon source may be coupled to a polarizer.

On the other hand, single-photon measuring unit 704 refers to any device capable of detecting single photons. Single-photon measuring unit 504 is further configured to resolve the single-photon polarization. For example, single photon measuring unit 504 may include a Polarization Beam Splitter (PBS), a Glan prism, or a calcite crystal followed by two single-photon detectors. Example technologies used for single-photon detectors include Avalanche Photodiodes (APDs), Superconducting Nanowire Single-Photon Detectors (SNSPDs), and Single-Photon Avalanche Diodes (SPADs).

In some embodiments, node '1' and node '8' may conduct additional checks to determine if there was any eavesdropping during the key generation process. They do this by selecting a portion of the key, typically around 10%, and comparing it publicly. If eavesdropping occurred, this portion of the key would likely contain errors. In such a scenario, the entire key is discarded, and the process is repeated from the beginning.

However, in some scenarios, the quantum communication channel 124 between node '1' and node '8' may be noisy. Accordingly, discrepancies in their bit strings may arise naturally, making it challenging to discern whether Eve, a potential eavesdropper, is intercepting communication. To address this, node '1' and node '8' employ information reconciliation via error-correcting codes. However, this process requires transmitting information over a public channel, which poses a risk as Eve could intercept this information. To mitigate Eve's potential access to the transmitted information, Node '1' and Node '8' minimize the amount of information exchanged over the public channel, thus limiting Eve's ability to gather useful data.

The other concern, i.e., ensuring that Eve possesses no partial information about the key, may be addressed through privacy amplification. This process aims to reduce any information that Eve may have obtained, whether through eavesdropping on the quantum channel during key transmission or intercepting information during reconciliation. Privacy amplification utilizes the shared key between node '1' and node '8' to generate a new, shorter key in such a manner that Eve's knowledge about the new key becomes negligible. This may be achieved using a randomness extractor, such as a randomly chosen hash function. The hash function takes the shared key as input and produces a shorter key output. If the chosen hash function exhibits sufficient randomness and the resulting key is significantly shorter, Eve's information about the key is greatly reduced compared to before the amplification. This ensures that even if Eve had partial knowledge of the original key, the final key is effectively secure against eavesdropping attempts. In some cases, privacy amplification may also enhance the entropy of an imperfect random bit-string, yielding a shorter but higher entropy key through classical post-processing techniques.

It is to be appreciated that key shifting, reconciliation, and privacy amplification imply an exchange of information between node '1' and node '8', accordingly in addition to quantum communication channel 124, node '1' and node '8' may share a classical communication channel 706, as illustrated in FIG. 7.

In the above-described BB84 protocol, both node '1' and node '8', may communicate their respective IQRN $s_{1,8}$,

$s_{8,1}$ after undergoing post-processing, i.e., after key shifting, and eventually information reconciliation and privacy amplification. For example, nodes '1' and '8' may send these post-processed IQRNs to user terminal 110 or publish them in register 150. Once communicated, a verification protocol employed to assess the honesty of nodes '1' and '8' and confirm the genuine generation of a QRN may consist of checking the reported bit-strings match ($s_{1,8} = s_{8,1}$), i.e., both nodes report identical strings. Alternatively, to minimize the exchange of data between nodes, nodes '1' and '8' may communicate the raw, unprocessed bit strings, i.e., the encoded bit string. $s_{1,8}$ and the measured bit string $s_{8,1}$, alongside the polarization bases used for encoding and measurement. In this scenario, the verification protocol may consist of performing the key shifting, and eventually any other post-processing function (e.g., information reconciliation and/or privacy amplification). Accordingly, the verification protocol may take as an input the IQRNs with verification data (set of basis), to determine post-processed IQRNs and evaluate their match (verification test) to ascertain whether the nodes have successfully generated a valid QRN and can be deemed honest. Further details regarding the verification protocol and the analysis of IQRNs generated via QKD protocols are provided in subsequent sections.

The described BB84 protocol represents a symmetric quantum random number generation experiment, where both nodes ultimately generate and hold identical IQRNs after execution and eventually post-processing. However, the hardware configurations of the two nodes differ: one node (node '1' in FIG. 7) is configured to transmit quantum states and encode a bit-string, while the other node (node '8' in FIG. 4) collects and measures quantum states to determine a bit string. When scaled up to encompass an entire QN and since each node may be configured to perform a QKD protocol with all the other nodes, each node may be capable of assuming two roles-Alice or Bob-and performing either the transmission or measurement of quantum states. The assignment of these roles can be determined randomly for a given QKD protocol. Therefore, each node 122 within QN 120 may be equipped with both a single-photon source 702 and a single-photon measuring unit 704. For instance, in FIG. 7, if node '1' assumes the role of Alice when engaging in the QKD protocol with node '8' it could then switch roles and assume the role of Bob when engaging in the QKD protocol with node '2'. This flexibility allows each node to participate effectively in the QKD protocols with all other nodes within QN 120.

BB84 protocol is one example of a QKD protocol where nodes possess different roles. Other protocols such as B92 protocols or continuous variable B92 protocols follow a similar path. In the B92 protocol, Alice and Bob engage in exchanging keys using non-orthogonal states, employing two distinct polarization bases, for instance, H-polarized photons for zero and D-polarized photons for 1. Alice sends bits (zeros or ones) using different polarization bases. Zeros are transmitted in the linear polarization basis, while ones are sent in the diagonal polarization basis. This choice of basis is random for both Alice and Bob. Upon receiving the transmitted photons, Bob randomly selects a basis for measurement. If Bob measures a V polarization in the linear polarization basis, he knows it couldn't have been H, thus concluding that the bit is one. Conversely, if he measures H on this basis, the result is inconclusive, and the bit is discarded. Similarly, if Bob uses the diagonal polarization basis and measures D, the result is inconclusive, as it could be D or H. Only when Bob measures A in the diagonal polarization basis can he confidently assign the bit as zero, as it cannot be D. This process ensures secure key distribution between Alice and Bob, with inconclusive measurements leading to the discarding of potentially compromised bits, thereby enhancing the security of the exchanged cryptographic key. Any two non-orthogonal states can be used for the B92 protocol, such as coherent states. In the case of coherent states, the hardware implementation may consist of a laser source with a phase modulator for Alice and a homodyne detection unit for Bob.

The E91 protocol relies on the principle of quantum entanglement for secure key distribution. The protocol operates as follows: Alice prepares a pair of entangled photons, using a source such as a parametric down-conversion crystal. Entangled photons are pairs of particles whose quantum states are intrinsically linked, regardless of the distance between them. An example of such states includes maximally entangled Bell pairs. Alice sends one photon from each entangled pair to Bob, while keeping the other photon for herself. Alice and Bob independently choose measurement bases for their respective photons. They can choose between two measurement bases, such as the Pauli-Z basis and the Pauli-X basis". Alice and Bob measure their respective photons based on the chosen measurement bases. After performing measurements, Alice and Bob communicate their measurement bases but not the specific measurement outcomes. Alice and Bob compare their measurement bases. If they used the same bases, they kept the corresponding measurement outcomes as bits of their secret key. If they used different bases, they discard the measurement outcomes. The security of the key is guaranteed by the principles of quantum mechanics. Any attempt by an eavesdropper, Eve, to intercept the entangled photons will disturb their quantum states, thereby revealing her presence. This enables Alice and Bob to detect eavesdropping attempts and discard any compromised bits from their key. Unlike BB84 and B92 protocols where single photons are exchanged between Alice and Bob, in the E91 protocol, entangled photons are exchanged. This unique feature allows for more flexibility in the placement of the source of entangled photons. The source can be controlled by either Alice or Bob, or it can be positioned somewhere in between them along the quantum communication channel. In scenarios where Alice and Bob have access to a source that continuously provides entangled photons, regardless of its location along the quantum communication channel, their roles can be identical. Both Alice and Bob would simply measure one of the two entangled photons they receive, as opposed to actively preparing and sending photons as in the BB84 and B92 protocols.

In the context of the B92 and E91 protocols, various post-processing steps may be carried out after execution, similar to those employed in the BB84 protocol. These steps may include checking for eavesdropping, information reconciliation, and/or privacy amplification. The exact details of the verification protocol used to determine the honesty of nodes depend on the specific protocol being used. For instance, in the case of the E91 protocol, verification may involve examining whether the two generated IQRNs exhibit bitwise opposition i.e., $s_{i,j} = \overline{s_{j,i}}$. This phenomenon is due to the entanglement between the photons shared by Alice and Bob. If the photons are entangled, their states are correlated, leading to a situation where the measurement outcomes of Alice and Bob are inversely related.

In any of the aforementioned protocols, one or more parameters of the quantum random number generation experiment can be adjusted based on the demand for a QRN. For instance, in a consensus mechanism where an XOR bitwise operation is used to aggregate the plurality of IQRNs, each individual IQRN may need to be at least as long as the final QRN. Due to various factors such as measurement basis mismatches, eavesdropping checks, and privacy amplification, some bits may be discarded during QKD protocols. Therefore, the number of quantum states exchanged and measured between two nodes may be determined based on the specified length for the final QRN.

For example, in the BB84 protocol, there is a minimum factor of two differences in the number of exchanged single photons between Node '1' and Node '8' and the length of the resulting IQRN. This is because, during key sifting, qubits that were not measured on the same basis are eliminated. Assuming no errors occur after this process, Node '1' needs to send at least twice the length of the final QRN in single photons to Node '8'. If a certain security level is specified in the demand, and privacy amplification is performed, additional overheads are introduced, leading to a higher initial number of exchanged single photons to ensure the desired level of security.

## 2. Analysis of the IQRNs

In the scenario wherein user terminal 110 is performing the analysis of the IQRNs, nodes performing QKD protocols may directly send post-processed IQRNs, i.e., IQRNs obtained after having performed the basis reconciliation (key shifting process), and eventually any other post-processing function (e.g., information reconciliation and/or privacy amplification). In such a configuration, the analysis of each of the plurality of IQRNs in accordance with the verification protocol performed by user terminal 110 (step 212-1 of FIG. 2C) may comprise analysing, for each one of the plurality of received IQRNs, if the IQRN associated with the first node obtained when executing the quantum protocol with the second node, corresponds with the IQRN associated with the second node obtained when executing the quantum protocol with the first node. For example, referring to FIG. 7, user terminal 110 may verify if the four bits of $s_{1,8}$ (IQRN associated with node '1' and generated via the QKD protocol executed with node '8') correspond to $s_{8,1}$ (IQRN associated with node '8' and generated the QKD protocol executed with node '1').

Alternatively, nodes performing QKD protocols may send raw IQRNs, i.e., raw bits obtained before performing the key shifting. In such a configuration, analysing, for each one of the plurality of received IQRNs, if the IQRN associated with the first node corresponds with the IQRN associated with the second node, may comprise analysing if each one of the first and second nodes retaining bits are associated with quantum particles where the second node measured the received quantum particle using the same basis that was used by the first node to prepare the quantum particles; and if each node generates its associated IQRN using the retained bits. For example, referring to FIG. 7, user terminal 110 may verify if the retained bits used to generate $s_{1,8}$ (IQRN associated with node '1' and generated via the QKD protocol executed with node '8') and $s_{8,1}$ (IQRN associated with node '8' and generated the QKD protocol executed with node '1'), are associated with quantum particles where node '8' measured the quantum particle using the same basis that was used by node '1' to prepare the quantum particle. Nodes '1' and '8' may therefore send in addition to the IQRNs, the information indicative of the basis they used in the preparation and the measurement of the quantum particles to user terminal 110.

In the scenario wherein QN 120 is performing the analysis of the IQRNs, each QN node 122 after having performed with each of the plurality of other nodes a QKD protocol and transmitted the resulting first plurality of IQRN may receive from the plurality of other nodes, a second plurality of IQRNs. The second plurality of IQRNs has been generated by executing the QKD protocol between the given node and each one of the plurality of other nodes. Each one of the second plurality of IQRNs is associated with a pair of unique identifiers "IDs", each pair of IDs comprising a first unique identifier uniquely identifying a node of the plurality of other nodes executing the quantum protocol with the given node, and a second unique identifier uniquely identifying the given node. For example, node '1' after transmitting the first plurality of IQRNs including $s_{1,2}$, $s_{1,3}$, $s_{1,4}$, $s_{1,5}$, $s_{1,6}$, $s_{1,7}$, and $s_{1,8}$ may receive from nodes '2' to '8' a second plurality of IQRNs including $s_{2,1}$, $s_{3,1}$, $s_{4,1}$, $s_{5,1}$, $s_{6,1}$, $s_{7,1}$, and $s_{8,1}$.

Each node 122 may then analyse each of the first plurality of IQRNs in accordance with a verification protocol, to determine a first plurality of verified IQRNs; and transmit the first plurality of verified IQRNs. For example, in some embodiments, each node 122 may analyse for each of the first plurality of IQRNs, if an IQRN associated with the pair of "IDs" comprising the first unique identifier uniquely identifying the node and the second unique identifier uniquely identifying the other node of the plurality of other nodes executing the quantum protocol with the node, corresponds with an IQRN included in the second plurality of IQRNs associated with the pair of "IDs" comprising the first unique identifier uniquely identifying the other node of the plurality of other nodes executing the quantum protocol with the node and the second unique identifier uniquely identifying the node. For example, referring to FIG. 7, node '1' may verify if the four bits of $s_{1,8}$ (IQRN associated with node '1' and generated via the QKD protocol executed with node '8', and transmitted by node '1') correspond to $s_{8,1}$ (IQRN associated with node '8' and generated the QKD protocol executed with node '1', transmitted by node '8').

After determining this first plurality of verified IQRNs each node may receive from the plurality of other nodes, a second plurality of verified IQRNs, the second plurality of verified IQRNs having been determined by analysing each of the second plurality of IQRNs in accordance with the verification protocol. A third plurality of verified may subsequently be received and each node 122 may proceed to the determination of the retained subset of IQRNs as described earlier.

## B. Interactive Proof of Quantumness (IPQ) protocols

### 1. Protocol

In accordance with some embodiments of the present disclosure, quantum protocols performed between a first node and a second node of a Quantum Network (QN), such as QN 120 illustrated in FIGS. 1A-B may be analogous to Interactive Proof of Quantumness (IPQ) protocols. An IPQ protocol refers to a protocol designed to demonstrate and verify the quantum properties of a quantum device or system. These protocols are used to convince an external verifier that a given device or system truly operates according to the laws of quantum mechanics, rather than being based on classical principles. An IPQ protocol comprises two parties, a prover and a verifier, where the goal is for the prover to prove to the verifier that they have honestly executed a quantum implementation of some function that cannot be spoofed by classical simulation and therefore to provide a convincing demonstration to the verifier that they are indeed quantum in nature, without the verifier needing to fully understand the underlying quantum mechanics. The verifier has only classical resources and both parties may classically communicate through a classical communication channel. In an IPQ protocol, the verifier interacts with the prover in a series of steps or rounds. During each round, the verifier sends instructions or queries to the prover, which responds accordingly. By analysing the responses from the prover, the verifier gains information about the quantum properties of the prover and can assess its quantumness.

In terms of hardware implementations, IPQ protocols require the prover to possess some quantum computing capabilities. However, both the verifier and the communication channel between the prover and the verifier can be classical. In some embodiments, each node acts both as a prover and a verifier for every other node. Accordingly, in FIG. 1B, if QN 120 incorporates nodes capable of executing IPQ protocols with all other nodes and acting both as a prover and a verifier, each communication link 124 corresponds to a classical communication channel, while nodes 122 represent setups with both quantum computing capabilities and classical computing capabilities.

In some embodiments, the function for which the prover is required to honestly execute a quantum implementation may correspond to a Trapdoor Claw-Free (TCF) function. TCFs are a class of cryptographic two-to-one, one-way functions for which there exists a secret "trapdoor" information that allows for efficient computation of the function in one direction but makes it computationally infeasible to compute the inverse function without this trapdoor information. This property enables a party possessing the trapdoor to efficiently compute the function in both directions, while parties without the trapdoor can only compute the function in one direction. A claw-free property implies that it is computationally difficult to find two distinct inputs that map to the same output. In other words, given the output of the function, it is hard to find two inputs that result in that output. However, if the trapdoor is known, finding the two inputs or claws is classically efficient for any output.

Furthermore, in some embodiments, the IPQ may be based on a lattice-based Learning With Errors (LWE) problem. The lattice-based Learning With Errors (LWE) problem, introduced by Goldwasser et al. (1985) and further developed by Regev (2009, 2010), serves as a candidate for constructing a Trapdoor Claw-Free (TCF) function. This problem is considered post-quantum, meaning that the associated claw-finding problem is believed to lie outside the realm of BQP, the class of problems efficiently solvable by quantum computers.

In the context of the LWE problem, a matrix A of dimensions m $\times$ n with elements from the set of integers modulo q, a prime number, denoted as $Z_q^{\mathrm{m} \times \mathrm{n}}$ may be constructed. Additionally, vectors x, y, s, and e (noise vector) belong to the set $\{0,1\}^n$. These vectors are related by the equation. $y = A \cdot s + e$, where arithmetic operations are performed modulo $q$. A TCF can be constructed using the LWE problem as follows:

$$f_I(x_b, b) = \lfloor A \cdot x_b + b \cdot y \rceil \qquad (5)$$

where $b = \{0,1\}$ represents a single bit, and claws are related by the equation $x_0 = x_1 + s$. The parameter $I = \{A, y\}$ specifies the problem instance derived from the secret trapdoor $T = \{s, e\}$ held by the verifier. This trapdoor enables efficient classical claw-finding and verification if known. While the function $f(x) \to w$ is classically efficient to evaluate in the forward direction, finding simultaneously satisfying pairs of inputs is believed to be hard for both classical and quantum computers.

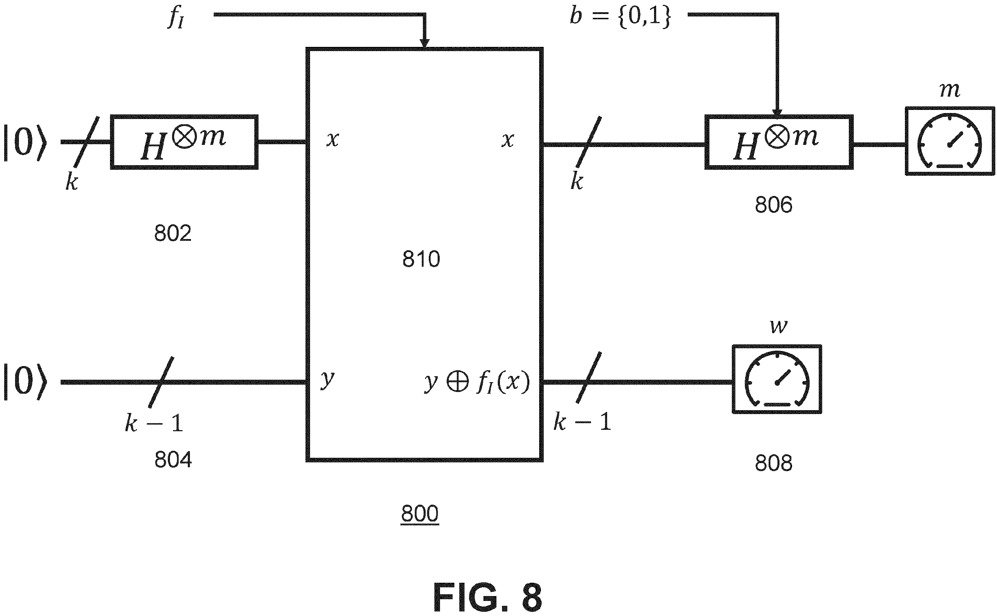

FIG. 8 is an illustration of an exemplary quantum protocol module included in each node 122 of QN 120 executing an IPQ protocol. As shown, each quantum module may include a quantum circuit 800 comprising an input register 802, an ancillary input register 804, an output register 806, an ancillary output register 808 and a plurality of quantum gates 810. In the context of a quantum circuit, a register refers to a collection of qubits that are used together as a unit to store and process quantum information. Similar to classical registers in digital circuits, which consist of bits, quantum registers consist of qubits, each of which can exist in a superposition of states. In the exemplary system shown in FIG.8 both the input 802 and the output 804 registers include $k$ qubits while the ancillary input 804 and the ancillary output 808 registers include $k$-1 qubits. As shown, the output register 806 replicates the input register 802. The input 802 and ancillary input 804 registers include mechanisms to initialize qubits and the output 806 and ancillary output 808 registers include measurement units to read qubits.

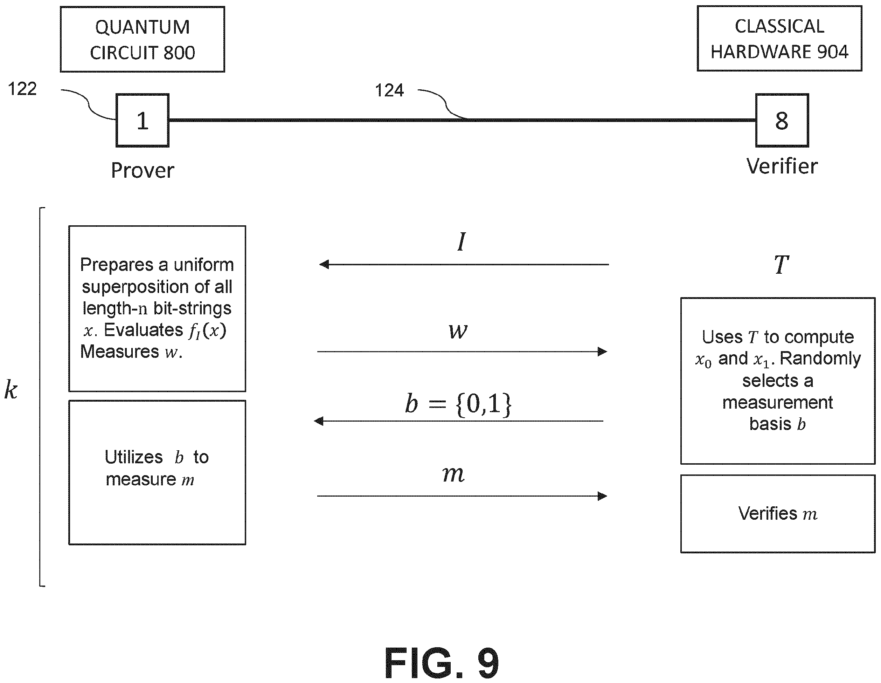

FIG. 9 is an illustration of an exemplary IPQ protocol between two nodes 122 of QN 120 shown in FIGS. 1A-B. More specifically, FIG. 9 illustrates how an IPQ protocol using a lattice-based LWE problem as TCF, between node "1" and node "8" may lead to the generation of an IQRN $s_{1,8}$, i.e., when node "1" acts as a prover and node "8" as a verifier. Consistent with the disclosed embodiments, the prover possesses some quantum computing capabilities relying on quantum circuit 800 shown in FIG. 8, while the verifier is only required to possess classical computing capabilities using therefore classical hardware 904. Communication channel 124 between the prover and the verifier corresponds to a classical communication channel.

The protocol is as follows: The verifier specifies a problem instance. $I$, without revealing the associated secret trapdoor T from which it was derived. The prover receives the problem instance and initializes four registers of qubits two for the inputs and two for the outputs. On the input register 802, the prover prepares a uniform superposition of all length-n bit-strings $x$. On the ancillary output register 808, they evaluate $f_I(x)$ which leads to the following entangled superposition:

$$|\psi\rangle = \sum |x\rangle |f_I(x)\rangle \qquad (6)$$

The prover then measures the ancillary output register 808, obtaining a measurement outcome w which is communicated to the verifier. Measuring w collapses input register onto the equal superposition of associated satisfying pre-images, i.e., into the state $(|x_0\rangle + |x_1\rangle)|w\rangle$ with $w = f(x_0) = f(x_1)$. As the input register was initialized into a uniform superposition over all length-$n$ bit-strings and the TCF is a two-to-one function, w is sampled uniformly at random. $w$ corresponds therefore to a QRN. The verifier may use the trapdoor T to compute $x_0$ and $x_1$.

The verifier then requests a projective measurement of the input register and publishes a random measurement basis in which the prover should measure qubits in the input register (or the output register), where $b = \{0 \equiv Z, 1 \equiv X\}$ corresponds to the respective Pauli measurement bases. When measuring in the $b = 0$ ($Z$) basis, the prover randomly measures either $m = x_0$ or $m = x_1$, easily verified by direct evaluation of $f(x) \rightarrow w$ and comparison with the prover's previously reported w. When measuring in the $b = 1(X)$ basis verification succeeds if $m \cdot x_0 = m \cdot x_1$. The above is repeated some constant number of rounds, independently randomising the measurement basis $b$ at every round.

Since $X$ and $Z$ measurements do not commute, it is not possible for the prover to know both measurement outcomes simultaneously. Therefore, the prover must measure in accordance with the verifier's stated measurement basis to pass verification of a single round. While a single round can be classically spoofed if the measurement basis $b$ is known in advance of announcing w, if unknown, $b$ can only be guessed with a probability of 1/2. Upon repetition, the probability of correctly guessing all measurement bases scales as $p = (1/2)^k$ for $k$ rounds, ensuring asymptotic confidence in the honesty of the prover.

In any of the aforementioned protocols, one or more parameters of the quantum random number generation experiment can be adjusted based on the demand for a final QRN. For example, a number of qubits for the output register, or one of the dimensions of the matrix may be selected as a function of the length of the final QRN.

## 2. Analysis of the IQRNs

To incorporate IPQs into the QN framework all nodes may act as both prover and verifier for all other nodes. Therefore, all nodes may use both a quantum circuit such as quantum circuit 800, and classical hardware, such as classical hardware 904. In some embodiments, each node (acting as the prover) may receive from each one of the plurality of nodes (acting as verifiers) via the classical communication channel a plurality of problem instances derived from a plurality of secret trapdoors. For each one of the plurality of received problem instances, each node may execute, using the quantum circuit, a quantum implementation of a TCF function generated from the problem instance; determine an IQRN by measuring the ancillary output register; send the IQRN to the other node associated with the received problem instance; receive from the other node information indicative of a random measurement basis; and measure the output register using the random measurement basis based on the received information.

Each node 122 (acting as a prover) may then transmit the first plurality of IQRNs obtained for each one of the plurality of problem instances. Each IQRN is associated with the pair of IDs comprising the first unique identifier uniquely identifying the node (acting as a prover) and the second unique identifier uniquely identifying the other node (acting as the verifier and sending the problem instance) of the plurality of other nodes executing the quantum protocol with the first node. Additionally, each node 122 (acting as a prover) may transmit the plurality of measurement outcomes obtained for each one of the plurality of problem instances.

In some embodiments, each node (acting as the verifier) may prepare and send to each one of the plurality of nodes, via the classical communication channel, a problem instance derived from a secret trapdoor. Despite solving the same problem instance their proofs will be distinct. Each node i commits a single random problem instance $I_i$ to all the other nodes j. For example, node '1' may commit problem instance $I_1$ to nodes '2', '3', '4', '5', '6', '7', and '8'. Each node acting as the verifier may then receive, from the plurality of other nodes via the classical communication channel, a second plurality of IQRNs. Each one of the second plurality of IQRNs has been generated by one other node of the plurality of other nodes executing, using a quantum circuit comprising an input register, an ancillary input register, an output register, an ancillary output register, and a plurality of quantum gates, a quantum implementation of a TCF function constructed from the problem instance sent, and measuring the ancillary output register. Each of the second plurality of IQRNs is associated with a pair of unique identifiers "IDs" comprising a first unique identifier uniquely identifying each one of the other nodes of the plurality of other nodes and a second unique identifier uniquely identifying the node acting as a verifier. In other words, each node i executes the quantum problem instance specified by every other node j and communicates the obtained $s_{i,j} = w_{i,j}$.

Each node (acting as the verifier) may send to each one of the plurality of other nodes via the classical communication channel, information indicative of a random measurement basis, and receive from each one of the plurality of other network processors via the classical communication channel, a measurement outcome. In other words, each node i commits the random measurement bases other nodes j will be required to measure in ($b_{i,j}$). Each node i completes their quantum computations and commits $m_{i,j}$. Each node (acting as the verifier) may then report the secret trapdoor (i.e., each node reveals their secret trapdoors $T_i$), information indicative of the plurality of measurement bases sent to the plurality of other nodes, and the plurality of measurement outcomes received from the plurality of nodes.

At the end of this process, if n denotes the number of nodes in the QN $n(n-1)$ IQRNs ($s_{i,j}/w_{i,j}$), measurement bases ($b_{i,j}$), and measurements ($m_{i,j}$) will be communicated alongside n problem instances ($I_i$) and secret trapdoor functions ($T_i$). This data may be sent to user terminal 110 or published in register 150. A verification protocol employed to assess the honesty of the nodes may take as an input this data and check for the consistency of the results. IQRNS obtained by IPQ protocols are classically verifiable once the verifier publishes the secret trapdoor of their problem instance. Since IPQ protocols are asymmetric protocols, a corresponding graph for QN 120 will be directed (from prover to verifier) with edges in both directions for every node pair. The majority votes are now made from the verifier perspective.

In the scenario wherein user terminal 110 is performing the analysis of the IQRNs, nodes performing IPQ protocols may send the different secret trapdoors, the plurality of measurement bases sent, and the plurality of measurement outcomes. In such a configuration, the analysis of each of the plurality of IQRNs in accordance with the verification protocol performed by user terminal 110 (step 212-1 of FIG. 2C) may comprise analysing, for each one of the plurality of received IQRNs, verification data (e.g., secret trapdoor, measurement bases sent) reported by the first node (node acting as the verifier) and verification data (e.g., IQRN w, measurement outcomes) reported by the second node (node acting as the prover).

In the scenario wherein QN 120 is performing the analysis of the IQRNs, each node 122 acting as a verifier may analyse the second plurality of IQRNs in accordance with a verification protocol, to determine a second plurality of verified IQRNs, and transmit the second plurality of verified IQRNs. In some embodiments, analysing the second plurality of IQRNs in accordance with the verification protocol may comprise analysing the second plurality of IQRNs based on the reported secret trapdoor, the plurality of measurement bases sent to the plurality of other nodes, and the plurality of measurement outcomes received from the plurality of other nodes.

Each node may then receive from the plurality of other nodes (acting as verifier when the node was acting as the prover) a first plurality of verified IQRNs. The first plurality of verified IQRNs may have been determined by analysing the first plurality of IQRNs based on the plurality of secret trapdoors, the plurality of measurement bases from the plurality of other nodes, and the plurality of measurement outcomes sent to the plurality of other nodes. A third plurality of verified may subsequently be received and each node 122 may proceed to the determination of the retained subset of IQRNs as described earlier.

Further features of the disclosure are outlined in the following numbered clauses.

1. A method for generating a quantum random number "QRN", the method comprising:

receiving from a plurality of nodes in a quantum network a plurality of initial quantum random numbers "IQRNs", wherein each initial quantum random number "IQRN" is generated by executing a quantum protocol between a first node and a second node comprised in the quantum network, and wherein each IQRN is associated with a first unique identifier "ID" uniquely identifying the first node, and a second unique identifier uniquely identifying the second node;

analysing the plurality of IQRNs and retaining a subset of the IQRNs that satisfy a consensus criterion; and,

generating the QRN using the subset of retained IQRNs.

2. The method of clause 1, comprising:

analysing each one of the plurality of IQRNs in accordance with a verification protocol, to identify a plurality of verified IQRNs, the plurality of verified IQRNs comprising each one of the plurality of IQRNs satisfying the verification protocol; and
determining, based on the plurality of verified IQRNs and their associated first and second unique identifiers, the subset of IQRNs that satisfy the consensus criterion by retaining verified IQRNs associated with a subset of nodes of the quantum network that have generated a verified IQRN with each other node in the subset of nodes.

3. The method of clause 1 or 2, comprising:

generating an adjacency matrix, using the plurality of verified IQRNs and the associated IDs, the adjacency matrix comprising a plurality of rows and columns, the number of rows and columns representing the plurality of nodes comprised in the quantum network, and each off-diagonal element of the adjacency matrix represents an outcome of the verification protocol corresponding to the IQRN generated by the first node associated with the row and the second node associated with the column;

generating, using the adjacency matrix, a sub-matrix, wherein each off-diagonal element of the sub-matrix corresponds to a positive outcome of the verification protocol; and

determining the subset of IQRNs, using the first and second IDs associated with each off-diagonal element of the sub-matrix to select the associated IQRN for each off-diagonal element.

4. The method of clause 2 or 3, wherein the quantum protocol comprises a quantum key distribution "QKD" protocol, and analysing each of the plurality of IQRNs in accordance with the verification protocol comprises:
analysing, for each one of the plurality of received IQRNs, if the IQRN associated with the first node obtained when executing the quantum protocol with the second node, corresponds with the IQRN associated with the second node obtained when executing the quantum protocol with the first node.

5. The method of clause 4, wherein the IQRN associated with the first node obtained when executing the quantum protocol with the second node is communicated by the first node; and
the IQRN associated with the second node obtained when executing the quantum protocol with the first node is communicated by the second node.

6. The method of clause 4 or 5, wherein the first node is configured to send a plurality of quantum particles prepared in accordance with a set of basis to the second node, and the second node is configured to measure the received one or more quantum particles in accordance with a randomly selected one of the set of basis; and

analysing, for each one of the plurality of received IQRNs, if the IQRN associated with the first node, corresponds with the IQRN associated with the second node, comprises:
each one of the first and second nodes retaining bits associated with quantum particles where the second node measured the received quantum particle using the same basis that was used by the first node to prepare the quantum particles;

each node generating its associated IQRN using the retained bits; and
determining if the IQRN generated by the first node corresponds with the IQRN generated by the second node.

7. The method of any one of clauses 4 to 6, wherein the QKD protocol comprises at least one of: a BB84 protocol, a single-photon protocol, an E91 protocol, an entanglement-based protocol; a weak coherent state protocol.

8. The method of clause 2 or 3, wherein the quantum protocol comprises an interactive proof of quantumness "IPQ" protocol; and analysing each of the plurality of IQRNs in accordance with the verification protocol comprises: analysing, for each one of the plurality of received IQRNs, verification data reported by the first node and verification data reported by the second node.

9. The method of clause 8, wherein the IPQ protocol comprises a Trapdoor Claw-Free "TCF" function.

10. The method of clause 8 or 9, wherein the IPQ protocol comprises a lattice-based Learning With Errors "LWE" problem.

11. The method of clause 1, comprising:

receiving from each one of the plurality of nodes, an outcome of a verification protocol associated with each received IQRN; and

determining, based on the outcome of the verification protocol associated with each received IQRN and the first and second unique identifiers associated with each received IQRN, the subset of IQRNs that satisfy the consensus criterion, by retaining verified IQRNs associated with a subset of nodes of the quantum network that have generated a verified IQRN with each other node in the subset of nodes.

12. The method of clause 11, comprising:

generating an adjacency matrix, using each received verification protocol outcome, the adjacency matrix comprising a plurality of rows and columns, the number of rows and columns representing the plurality of nodes comprised in the quantum network, and each off-diagonal element of the adjacency matrix represents the received outcome corresponding to the IQRN generated by the first node associated to the row and the second node associated to the column;

generating, using the adjacency matrix, a sub-matrix, wherein each off-diagonal element of the sub-matrix corresponds to a positive outcome of the verification protocol; and

determining the subset of IQRNs using the first and second IDs associated with each off-diagonal element of the sub-matrix to select the associated IQRN for each off-diagonal element.

13. The method of clause 12, wherein the outcome of the verification protocol associated with each received IQRN is generated by one of the first and second nodes.

14. The method of any one of clauses 3 to 13, wherein generating the sub-matrix comprises:

removing rows and columns from the adjacency matrix that comprise a majority of off-diagonal elements representing a negative outcome of the verification protocol; and,

subsequently removing rows and columns that comprise at least one off-diagonal element representing a negative outcome of the verification protocol to generate the sub-matrix.

15. The method of any preceding clause, wherein generating the QRN includes combining the retained IQRNs in accordance with a mathematical operation.

16. The method of clause 15, wherein the mathematical operation is a non-entropy decreasing operation.

17. The method of clause 15 or 16, wherein the mathematical operation is an XOR bitwise operation.

18. The method of clause 15, wherein the mathematical operation comprises aggregating the retained IQRNs.

19. The method of any preceding clause, wherein the number of nodes in the quantum network is equal to $n$, and the number of received IQRNs is equal to $n(n\text{-}1)$.

20. The method of any preceding clause, further comprising sending a request for the QRN.

21. A system for a generating a quantum random number "(QRN")", the system comprising at least one processor, wherein the system is configured to perform the method of any one of clauses 1 to 20.

22. A system for generating a quantum random number "QRN", the system comprising:

a receiver for receiving from a plurality of nodes in a quantum network a plurality of initial quantum random numbers "IQRNs", wherein each initial quantum random number "IQRN" is generated by executing a quantum protocol between a first node and a second node comprised in the quantum network, and wherein each IQRN is associated with a first unique identifier "ID" uniquely identifying the first node, and a second unique identifier "ID" uniquely identifying the second node;

a processor configured to:

analyse the plurality of IQRNs and retain a subset of the IQRNs that satisfy a consensus criterion;

generate the QRN using the subset of retained IQRNs.

23. The system of clause 22, wherein the processor is configured to:
analyse each of the plurality of IQRNs in accordance with a verification protocol, to determine a plurality of verified IQRNs; and,
determine, based on the plurality of verified IQRNs and their associated first and second unique identifiers, the subset of IQRNs that satisfy the consensus criterion by retaining verified IQRNs associated with a subset of nodes of the quantum network that have generated a verified IQRN with each other node in the subset of nodes.

24. The system of clause 23, wherein the processor is configured to:

generate an adjacency matrix, using the plurality of verified IQRNs and the associated IDs, the adjacency matrix comprising a plurality of rows and columns, the number of rows and columns representing the plurality of nodes comprised in the quantum network, and each off-diagonal element of the adjacency matrix represents an outcome of the verification protocol corresponding to the IQRN generated by the first node associated to the row and the second node associated to the column;

generate, using the adjacency matrix, a sub-matrix, wherein each off-diagonal element of the sub-matrix corresponds to a positive outcome of the verification protocol; and

determine the subset of IQRNs, using the first and second IDs associated with each off-diagonal element of the sub-matrix to select the associated IQRN for each off-diagonal element.

25. The system of clause 23 or 24, wherein the quantum protocol comprises a quantum key distribution "QKD" protocol, and the processor is configured to:
analyse, for each one of the plurality of received IQRNs, if the IQRN associated with the first node obtained when executing the quantum protocol with the second node, corresponds with the IQRN associated with the second node obtained when executing the quantum protocol with the first node.

26. The system of clause 23 or 24, wherein the quantum protocol comprises an interactive proof of quantumness "IPQ" protocol, and the processor is configured to:
analyse, for each one of the plurality of received IQRNs, verification data reported by the first node and verification data reported by the second node.

27. The system of clause 22, wherein the receiver is configured to:

receive from each one of the plurality of nodes, an outcome of a verification protocol associated with each received IQRN; and

the processor is configured to:
determine, based on the outcome of the verification protocol associated with each received IQRN and the first and second unique identifiers associated with each received IQRN, the subset of IQRNs that satisfy the consensus criterion by retaining verified IQRNs associated with a subset of nodes of the quantum network that have generated a verified IQRN with each other node in the subset of nodes.

28. The system of clause 27, wherein the processor is configured to:

generate an adjacency matrix, using each received verification protocol outcome, the adjacency matrix comprising a plurality of rows and columns, the number of rows and columns representing the plurality of nodes comprised in the quantum network, and each off-diagonal element of the adjacency matrix represents the received outcome corresponding to the IQRN generated by the first node associated to the row and the second node associated to the column;

generate, using the adjacency matrix, a sub-matrix, wherein each off-diagonal element of the sub-matrix corresponds to a positive outcome of the verification protocol; and

determine the subset of IQRNs using the first and second IDs associated with each off-diagonal element of the sub-matrix to select the associated IQRN for each off-diagonal element.

29. The system of any one of clauses 24 to 28, wherein the processor is configured to:

remove rows and columns from the adjacency matrix that comprise a majority of off-diagonal elements representing a negative outcome of the verification protocol; and

subsequently, remove rows and columns that comprise at least one off-diagonal element representing a negative outcome of the verification protocol to generate the sub-matrix.

30. The system of any one of clauses 22 to 29, wherein the processor is configured to generate the QRN by combining the retained IQRNs in accordance with a mathematical operation.

31. The system of clause 30, wherein the mathematical operation is a non-entropy decreasing operation.

32. The system of clause 30 or 31, wherein the mathematical operation is an XOR bitwise operation.

33. The system of clause 30, wherein the mathematical operation comprises aggregating the retained IQRNs.

34. The system of any one of clauses 32 to 33, comprising a transmitter configured to send a request for the QRN.

35. A method for generating a quantum random number "QRN" by a first node in a quantum network comprising a plurality of other nodes, the method comprising:

executing a quantum protocol with each one of the plurality of other nodes, the output of each executed quantum protocol comprises an initial quantum random number "IQRN", each IQRN is associated with a pair of unique identifiers "IDs", each pair of IDs comprising a first unique identifier uniquely identifying the first node, and a second unique identifier uniquely identifying a node of the plurality of other nodes executing the quantum protocol with the first node; and,

transmitting a first plurality of IQRNs obtained with each one of the plurality of other nodes enabling the QRN to be generated.

36. The method of clause 35, wherein a number of nodes in the quantum network is equal to n, and a number of the first plurality of IQRNs is equal to (n-1).

37. The method of clause 35 or 36, wherein the quantum protocol comprises a QKD protocol.

38. The method of clause 37, wherein the QKD protocol comprises at least one of: a BB84 protocol, a single-photon protocol, an E91 protocol, an entanglement-based protocol, a weak coherent state protocol.

39. The method of clause 37 or 38, wherein executing the quantum protocol with each one of the plurality of other nodes, comprises:

preparing a plurality of quantum particles in accordance with a set of bases;

sending the plurality of quantum particles to the other node via a quantum communication channel;

receiving, from the other node, information indicative of the measurement basis used to measure each received quantum particle;

discarding bits associated with quantum particles where the other node measured the quantum particle using the incorrect measurement basis, and generating the IQRN associated with the first node and the other node from the bits associated with the remaining quantum particles; and

transmitting the IQRN with the pair of IDs associated with the first node and the other node.

40. The method of clause 37 or 38, wherein executing the quantum protocol with each one of the plurality of other nodes, comprises:

receiving, from the other node, via a quantum communication channel, a plurality of quantum particles prepared in accordance with a set of basis;

measuring each one of the plurality of received quantum particles, using a randomly selected one of the set of bases;

communicating information associated with the basis used to measure each received quantum particle to the other node;
receiving from the other node information indicative of the quantum particles measured in the same basis as the other node;

retaining a bit associated with each quantum particle measured in the same basis as the other node, and generating the IQRN using the retained bits;

transmitting the IQRN with the pair of IDs associated with the first node and the other node.

41. The method of clause 39 or 40, further comprising:
receiving from the plurality of other nodes, a second plurality of IQRNs, the second plurality of IQRNs having been generated by executing the QKD protocol between the first node and each one of the plurality of other nodes, and wherein each one of the second plurality of IQRNs is associated with a pair of unique identifiers "IDs", each pair of IDs comprising a first unique identifier uniquely identifying a node of the plurality of other nodes executing the quantum protocol with the first node, and a second unique identifier uniquely identifying the first node; and wherein a number of nodes in the quantum network is equal to n, and a number of the second plurality of IQRNs is equal to (n-1).

42. The method of clause 41 or 42, further comprising:

analysing each of the first plurality of IQRNs in accordance with a verification protocol, to determine a first plurality of verified IQRNs; and

transmitting the first plurality of verified IQRNs.

43. The method of clause 42 wherein analysing each of the first plurality of IQRNs in accordance with the verification protocol, comprises:
analysing for each of the first plurality of IQRNs, if an IQRN associated with the pair of "IDs" comprising the first unique identifier uniquely identifying the first node and the second unique identifier uniquely identifying the node of the plurality of other nodes executing the quantum protocol with the first node, corresponds with an IQRN included in the second plurality of IQRNs associated with the pair of "IDs" comprising the first unique identifier uniquely identifying the node of the plurality of other nodes executing the quantum protocol with the first node the second unique identifier uniquely identifying the first node.

44. The method of clause 42 or 43, further comprising:
receiving from the plurality of other nodes, a second plurality of verified IQRNs, the second plurality of verified IQRNs having been determined by analysing each of the second plurality of IQRNs in accordance with the verification protocol.

45. The method of clause 35 or 36, wherein the quantum protocol comprises an interactive proof of quantumness "IPQ" protocol.

46. The method of clause 45, wherein the IPQ protocol comprises a Trapdoor Claw-Free "TCF" function.

47. The method of clause 45 or 46, wherein the IPQ comprises a lattice-based Learning With Errors "LWE" problem.

48. The method of clause 46 or 47, wherein executing the quantum protocol with each one of the plurality of other nodes, comprises:

receiving from each one of the plurality of other nodes a plurality of problem instances derived from a plurality of secret trapdoors;

for each one of the plurality of received problem instances:

executing, using a quantum circuit comprising an input register, an ancillary input register, an output register, an ancillary output register and a plurality of quantum gates, a quantum implementation of a TCF function generated from the problem instance;

determining an IQRN by measuring the ancillary output register;

sending the IQRN to the other node associated with the received problem instance;

receiving from the other node information indicative of a random measurement basis;

measuring the output register using the random measurement basis based on the received information.

49. The method of clause 48, comprising:

transmitting the first plurality of IQRNs obtained for each one of the plurality of problem instances, wherein each IQRN is associated with the pair of IDs comprising the first unique identifier uniquely identifying the first node and the second unique identifier uniquely identifying the node of the plurality of other nodes executing the quantum protocol with the first node; and

transmitting the plurality of measurement outcomes obtained for each one of the plurality of problem instances.

50. The method of clause 48 or 49, wherein executing the quantum protocol with each one of the plurality of other nodes, further comprises:

sending to each one of the plurality of other nodes a problem instance derived from a secret trapdoor;

receiving from the plurality of other nodes, a second plurality of IQRNs, each one of the second plurality of IQRNs having been generated by one other node of the plurality of other nodes executing, using a quantum circuit comprising an input register, an ancillary input register, an output register and an ancillary output register, and a plurality of quantum gates, a quantum implementation of a TCF function constructed from the problem instance sent, and measuring the ancillary output register, and wherein each of the second plurality of IQRNs is associated with a pair of unique identifiers "IDs" comprising the first unique identifier uniquely identifying the first node, and a second unique identifier uniquely identifying the one other node of the plurality of other nodes;

sending to each one of the plurality of other nodes information indicative of a random measurement basis;

receiving, from each one of the plurality of other nodes, a measurement outcome;

sending the secret trapdoor, the plurality of measurement basis sent to the plurality of other nodes, and the plurality of measurement outcomes received from the plurality of other nodes;

analysing the second plurality of IQRNs in accordance with a verification protocol, to determine a second plurality of verified IQRNs; and

transmitting the second plurality of verified IQRNs.

51. The method of clause 50, wherein analysing the second plurality of IQRNs in accordance with the verification protocol, comprises:
analysing the second plurality of IQRNs based on the reported secret trapdoor, the plurality of measurement bases sent to the plurality of other nodes and the plurality of measurement outcomes received from the plurality of other nodes.

52. The method of any one of clauses 49 to 51, further comprising:
receiving from the plurality of other nodes a first plurality of verified IQRNs, wherein the first plurality of verified IQRNs having been determined by analysing the first plurality of IQRNs based on the plurality of secret trapdoors, the plurality of measurement bases from the plurality of other nodes and the plurality of measurement outcomes sent to the plurality of other nodes.

53. The method of clause 44 or 52, further comprising:
receiving from the plurality of other nodes, a third plurality of IQRNs, each one of the third plurality of IQRNs having been generated by executing a quantum protocol between a first one and a second one of the plurality of other nodes, and wherein each of the third plurality of IQRNs is associated with a pair of unique identifiers "IDs" uniquely identifying the first one and the second one of the plurality of other nodes.

54. The method of clause 53, wherein a number of nodes in the quantum network is equal to n, and a number of the third plurality of IQRNs is equal to (n-2)(n-1).

55. The method of clause 53 or 54, further comprising:
receiving from the plurality of nodes a third plurality of verified IQRNs, the third plurality of verified IQRNs having been determined by analysing each of the third plurality of IQRNs in accordance with the verification protocol.

56. The method of clause 55, further comprising:
determining, based on the first plurality of verified IQRNs, the second plurality of verified IQRNs, the third plurality of verified IQRNs and their associated unique identifiers, a subset of IQRNs that satisfy a consensus criterion by retaining verified IQRNs associated with a subset of nodes of the quantum network that have generated a verified IQRN with each other node in the subset of nodes.

57. The method of clause 56, further comprising:

generating an adjacency matrix, using the first plurality of verified IQRNs, the second plurality of verified IQRNs, the third plurality of verified IQRNs and the associated pairs of IDs, the adjacency matrix comprising a plurality of rows and columns, the number of rows and columns representing the plurality of nodes comprised in the quantum network, and each off-diagonal element of the adjacency matrix represents an outcome of the verification protocol corresponding to the IQRN generated by the first node associated to the row and the second node associated to the column;

generating, using the adjacency matrix, a sub-matrix, wherein each off-diagonal element of the sub-matrix corresponds to a positive outcome of the verification protocol; and

determining the subset of IQRNs compliant with the consensus criteria, obtained from the first plurality of IQRNs, the second plurality of IQRNs, and the third plurality of IQRNs using the IDs associated with each off-diagonal element of the sub-matrix to select the associated IQRN for each off-diagonal element.

58. The method of clause 57, wherein generating the sub-matrix comprises:

removing rows and columns from the adjacency matrix that comprise a majority of off-diagonal elements representing a negative outcome of the verification protocol; and
subsequently removing rows and columns that comprise at least one off-diagonal element representing a negative outcome of the verification protocol to generate the sub-matrix.

59. The method of clause 57 or 58, further comprising:

generating the QRN using the subset of retained IQRNs; and,

transmitting the QRN.

60. The method of clause 59, wherein generating the QRN includes combining the retained subset of IQRNs in accordance with a mathematical operation.

61. The method of clause 60, wherein the mathematical operation is a non-entropy decreasing operation.

62. The method of clause 60 or 61, wherein the mathematical operation is an XOR bitwise operation.

63. The method of clause 60, wherein the mathematical operation comprises aggregating the retained IQRNs.

64. The method of any one of clauses 56 to 63, wherein the subset of IQRNs is associated with a subset of nodes complying with the consensus criteria.

65. The method of clause 64, further comprising sending a reward to each of the subset of nodes complying with the consensus criteria.

66. The method of clause 65, wherein the reward is independent of the number of nodes in the subset of nodes.

67. The method of any one of clauses 35 to 66, further comprising receiving a request for the QRN and determining one or more parameters for the quantum protocols in accordance with the received request.

68. A system for generating a quantum random number "QRN", the system comprising a processor, wherein the system is configured to perform the method of any one of clauses 35 to 67.

69. A system for generating a quantum random number "QRN" in a quantum network comprising a plurality of nodes, the system being configurable in use as a node in the quantum network, and the system comprising:

a processor;

a quantum protocol module configured to execute a quantum protocol with each one of the plurality of nodes comprised in the quantum network, the output of each executed quantum protocol comprises an initial quantum random number "IQRN", each IQRN is associated with a pair of unique identifiers "IDs", each pair of IDs comprising a first unique identifier uniquely identifying the system, and a second unique identifier uniquely identifying a node of the plurality of nodes executing the quantum protocol with the system; and

a communication module configured to transmit a first plurality of IQRNs obtained with each one of the plurality of nodes, the first plurality of IQRNs enabling the QRN to be generated.

70. The system of clause 69, wherein the quantum protocol comprises a QKD protocol, and the quantum protocol module comprises:
a quantum particle source, enabling the generation of quantum particles; a quantum particle measurement device, enabling the detection of quantum particles; and wherein
the communication module comprises:

a quantum channel enabling the transmission of quantum particles between the system and the plurality of nodes of the quantum network; and
a classical communication channel enabling the transmission of data between the system and the plurality of nodes of the quantum network.

71. The system of clause 70, wherein the QKD protocol comprises at least one of: a BB84 protocol, a single-photon protocol, an E91 protocol, an entanglement-based protocol, a weak coherent state protocol.

72. The system of clause 70 or 71, wherein the quantum particle source is configured to:

prepare, a plurality of quantum particles in accordance with a set of basis;

the communication module is configured to:

transmit, via the quantum channel, the plurality of quantum particles to another node in the quantum network;

receive, from the other node, via the classical communication channel, information indicative of the measurement basis used to measure each received quantum particle;

the processor is configured to:
discard bits associated with quantum particles where the other node measured the quantum particle using the incorrect measurement basis; and generate the IQRN associated with the first node and the other node from the bits associated with the remaining quantum particles; and wherein

the communication module is further configured to:
transmit the IQRN with the pair of IDs associated with the system and the other node.

73. The system of clause 70 or 71, wherein the communication module is configured to receive, from another node in the quantum network, via the quantum communication channel, a plurality of quantum particles prepared in accordance with a set of basis;

the quantum particle measurement device is configured to measure each one of the plurality of received quantum particles, using a randomly selected one of the set of basis;

the communication module is further configured to:

communicate, via the classical communication channel, information associated with the basis used to measure each received quantum particle to the other node;

receive, from the other node, via the classical communication channel, information indicative of the quantum particles measured in the same basis as the other node;

retain a bit associated with each quantum particle measured in the same basis as the other node,

the processor is configured to:

generate the IQRN using the retained bits; and

the communication module is configured to:
transmit the IQRN with the pair of IDs associated with the system and the other node.

74. The system of clause 72 or 73, wherein the communication module is configured to:
receive from the plurality of other nodes, a second plurality of IQRNs, the second plurality of IQRNs having been generated by executing the QKD protocol between the node and each one of the plurality of other nodes, and wherein each one of the second plurality of IQRNs is associated with a pair of unique identifiers "IDs", each pair of IDs comprising a first unique identifier uniquely identifying an other node of the plurality of other nodes executing the quantum protocol with the system, and a second unique identifier uniquely identifying the system.

75. The system of clause 74, wherein the processor is configured to:

analyse each of the first plurality of IQRNs in accordance with a verification protocol, to determine a first plurality of verified IQRNs; and

the communication module is configured to transmit the first plurality of verified IQRNs.

76. The system of clause 75 wherein the processor is configured to:
analyse for each of the first plurality of IQRNs if an IQRN associated with the pair of "IDs" comprising the first unique identifier uniquely identifying the system and the second unique identifier uniquely identifying the other node of the plurality of other nodes executing the quantum protocol with the system corresponds with an IQRN included in the second plurality of IQRNs associated with the pair of "IDs" comprising the first unique identifier uniquely identifying the other node of the plurality of other nodes executing the quantum protocol with the system and the second unique identifier uniquely identifying the system.

77. The system of any of clauses 74 to 76, wherein the communication module is configured to:
receive from the plurality of other nodes a second plurality of verified IQRNs, the second plurality of verified IQRNs having been determined by analysing each of the second plurality of IQRNs in accordance with the verification protocol.

78. The system of clause 69, wherein the quantum protocol comprises an interactive proof of quantumness "IPQ" protocol, and the quantum protocol module comprises:

a quantum circuit comprising an input register, an ancillary input register, an output register, an ancillary output register and a plurality of quantum gates, wherein the input and ancillary input registers include mechanisms to initialize qubits and the output and ancillary output registers include measurement units to read qubits; and

the communication module comprises a classical communication channel enabling the transmission of data between the system and the plurality of other nodes of the quantum network.

79. The system of clause 78, wherein the IPQ protocol comprises a Trapdoor Claw-Free "TCF" function.

80. The system of clause 78 or 79, wherein the IPQ comprises a lattice-based Learning With Errors "LWE" problem.

81. The system of clause 79 or 80, wherein the communication module is configured to:

receive from each one of the plurality of nodes via the classical communication channel a plurality of problem instances derived from a plurality of secret trapdoors; and

for each one of the plurality of received problem instances, the processor is configured to:

execute, using the quantum circuit, a quantum implementation of a TCF function generated from the problem instance;

determine an IQRN by measuring the ancillary output register;

send the IQRN to the other node associated with the received problem instance;

receive from the other node information indicative of a random measurement basis;

measure the output register using the random measurement basis based on the received information.

82. The system of clause 81, wherein the communication module is configured to:

transmit the first plurality of IQRNs obtained for each one of the plurality of problem instances, wherein each IQRN is associated with the pair of IDs comprising the first unique identifier uniquely identifying the node and the second unique identifier uniquely identifying the other node of the plurality of other nodes executing the quantum protocol with the node; and

transmit the plurality of measurement outcomes obtained for each one of the plurality of problem instances.

83. The system of clause 81 or 82, wherein the communication module is configured to:

send to each one of the plurality of nodes, via the classical communication channel, a problem instance derived from a secret trapdoor;

receive, from the plurality of other nodes via the classical communication channel, a second plurality of IQRNs, each one of the second plurality of IQRNs having been generated by one other node of the plurality of other nodes executing, using a quantum circuit comprising an input register, an ancillary input register, an output register, an ancillary output register and a plurality of quantum gates, a quantum implementation of a TCF function constructed from the problem instance sent, and measuring the ancillary output register, and wherein each of the second plurality of IQRNs is associated with a pair of unique identifiers "IDs" comprising a first unique identifier uniquely identifying each one of the other node of the plurality of other nodes and a second unique identifier uniquely identifying the system;

send to each one of the plurality of other nodes via the classical communication channel, information indicative of a random measurement basis;

receive from each one of the plurality of other network processors via the classical communication channel, a measurement outcome;

report the secret trapdoor, information indicative of the plurality of measurement bases sent to the plurality of other nodes, and the plurality of measurement outcomes received from the plurality of nodes;

analyse the second plurality of IQRNs in accordance with a verification protocol, to determine a second plurality of verified IQRNs; and

report the second plurality of verified IQRNs.

84. The system of clause 83, wherein the processor is configured to:
analyse the second plurality of IQRNs based on the reported secret trapdoor, the plurality of measurement bases sent to the plurality of other nodes and the plurality of measurement outcomes received from the plurality of other nodes.

85. The system of clause 83 or 84, wherein the communication module is configured to:
receive from the plurality of other nodes a first plurality of verified IQRNs, wherein the first plurality of verified IQRNs having been determined by analysing the first plurality of IQRNs based on the plurality of secret trapdoors, the plurality of measurement bases from the plurality of other nodes and the plurality of measurement outcomes sent to the plurality of other nodes.

86. The system of clause 77 or 85, wherein the communication module is configured to:
receive from the plurality of other nodes, a third plurality of IQRNs, each one of the third plurality of IQRNs having been generated by executing a quantum protocol between a first other node and a second other node of the plurality of other nodes, and wherein each of the third plurality of IQRNs is associated with a pair of unique identifiers "IDs" including a first unique identifier uniquely identifying the first other node, and a second unique identifier uniquely identifying the second other node.

87. The system of clause 86, wherein the communication module is configured to:
receive from the plurality of other nodes a third plurality of verified IQRNs, the third plurality of verified IQRNs having been determined by analysing each of the third plurality of IQRNs in accordance with the verification protocol.

88. The system of clause 87, wherein the processor is configured to:
determine, based on the first plurality of verified IQRNs, the second plurality of verified IQRNs, the third plurality of verified IQRNs and their associated first and second unique identifiers, a subset of IQRNs that satisfy a consensus criterion by retaining verified IQRNs associated with a subset of nodes of the quantum network that have generated a verified IQRN with each other node in the subset of nodes.

89. The system of clause 88, wherein the processor is configured to:

generate an adjacency matrix, using the first plurality of verified IQRNs, the second plurality of verified IQRNs, the third plurality of verified IQRNs and the associated pairs of IDs, the adjacency matrix comprising a plurality of rows and columns, the number of rows and columns representing the plurality of nodes comprised in the quantum network, and each off-diagonal element of the adjacency matrix represents an outcome of the verification protocol corresponding to the IQRN generated by the first node associated to the row and the second node associated to the column;

generate, using the adjacency matrix, a sub-matrix, wherein each off-diagonal element of the sub-matrix corresponds to a positive outcome of the verification protocol; and

determine the subset of IQRNs compliant with the consensus criteria, retained from the first plurality of IQRNs, the second plurality of IQRNs, and the third plurality of IQRNs using the IDs associated with each off-diagonal element of the sub-matrix to select the associated IQRN for each off-diagonal element.

90. The system of clause 89, wherein the processor is configured to:

remove rows and columns from the adjacency matrix that comprise a majority of off-diagonal elements representing a negative outcome of the verification protocol; and

subsequently remove rows and columns that comprise at least one off-diagonal element representing a negative outcome of the verification protocol to generate the sub-matrix.

91. The system of clause 89 or 90, wherein the processor is configured to:

generate the QRN using the subset of retained IQRNs; and

the communication module is configured to transmit the QRN.

92. The system of clause 91, wherein the processor is configured to generate the QRN by combining the retained subset of IQRNs in accordance with a mathematical operation.

93. The system of clause 92, wherein the mathematical operation is a non-entropy decreasing operation.

94. The system of clause 92 or 93, wherein the mathematical operation is an XOR bitwise operation.

95. The system of clause 92, wherein the mathematical operation comprises aggregating the retained IQRNs.

96. The system of any one of clauses 88 to 95, wherein the subset of IQRNs is associated with a subset of nodes complying with the consensus criteria.

97. The system of clause 96, wherein the processor is configured to:
send a reward to each of the subset of nodes complying with the consensus criteria.

98. The system of any one of clauses 69 to 97, wherein the system is configured to:
receive via the communication module a request for the QRN and determine one or more parameters for the quantum protocols in accordance with the received request.

99. A quantum network enabling a quantum random number "QRN" to be generated, the quantum network comprising:
a plurality of systems according to any one of clauses 69 to 98.

**Claims**

1.  A system for generating a quantum random number "QRN", the system comprising:

a receiver for receiving from a plurality of nodes in a quantum network a plurality of initial quantum random numbers "IQRNs", wherein each initial quantum random number "IQRN" is generated by executing a quantum protocol between a first node and a second node comprised in the quantum network, and wherein each IQRN is associated with a first unique identifier "ID" uniquely identifying the first node, and a second unique identifier "ID" uniquely identifying the second node;
a processor configured to:

analyse the plurality of IQRNs and retain a subset of the IQRNs that satisfy a consensus criterion;
generate the QRN using the subset of retained IQRNs.

**2.** The system of claim 1, wherein the processor is configured to:
analyse each of the plurality of IQRNs in accordance with a verification protocol, to determine a plurality of verified IQRNs; and,
determine, based on the plurality of verified IQRNs and their associated first and second unique identifiers, the subset of IQRNs that satisfy the consensus criterion by retaining verified IQRNs associated with a subset of nodes of the quantum network that have generated a verified IQRN with each other node in the subset of nodes.

**3.** The system of claim 2, wherein the processor is configured to:

generate an adjacency matrix, using the plurality of verified IQRNs and the associated IDs, the adjacency matrix comprising a plurality of rows and columns, the number of rows and columns representing the plurality of nodes comprised in the quantum network, and each off-diagonal element of the adjacency matrix represents an outcome of the verification protocol corresponding to the IQRN generated by the first node associated to the row and the second node associated to the column;
generate, using the adjacency matrix, a sub-matrix, wherein each off-diagonal element of the sub-matrix corresponds to a positive outcome of the verification protocol; and
determine the subset of IQRNs, using the first and second IDs associated with each off-diagonal element of the sub-matrix to select the associated IQRN for each off-diagonal element.

**4.** The system of claim 2 or 3, wherein the quantum protocol comprises a quantum key distribution "QKD" protocol, and the processor is configured to:
analyse, for each one of the plurality of received IQRNs, if the IQRN associated with the first node obtained when executing the quantum protocol with the second node, corresponds with the IQRN associated with the second node obtained when executing the quantum protocol with the first node.

**5.** The system of claim 2 or 3, wherein the quantum protocol comprises an interactive proof of quantumness "IPQ" protocol, and the processor is configured to:
analyse, for each one of the plurality of received IQRNs, verification data reported by the first node and verification data reported by the second node.

**6.** The system of claim 1, wherein the receiver is configured to:

receive from each one of the plurality of nodes, an outcome of a verification protocol associated with each received IQRN; and
the processor is configured to:
determine, based on the outcome of the verification protocol associated with each received IQRN and the first and second unique identifiers associated with each received IQRN, the subset of IQRNs that satisfy the consensus criterion by retaining verified IQRNs associated with a subset of nodes of the quantum network that have generated a verified IQRN with each other node in the subset of nodes.

**7.** The system of claim 6, wherein the processor is configured to:

generate an adjacency matrix, using each received verification protocol outcome, the adjacency matrix comprising a plurality of rows and columns, the number of rows and columns representing the plurality of nodes comprised in the quantum network, and each off-diagonal element of the adjacency matrix represents the received outcome corresponding to the IQRN generated by the first node associated to the row and the second node associated to the column;
generate, using the adjacency matrix, a sub-matrix, wherein each off-diagonal element of the sub-matrix corresponds to a positive outcome of the verification protocol; and
determine the subset of IQRNs using the first and second IDs associated with each off-diagonal element of the sub-matrix to select the associated IQRN for each off-diagonal element.

**8.** The system of any one of claims 3 to 7, wherein the processor is configured to:

remove rows and columns from the adjacency matrix that comprise a majority of off-diagonal elements representing a negative outcome of the verification protocol; and
subsequently remove rows and columns that comprise at least one off-diagonal element representing a negative outcome of the verification protocol to generate the sub-matrix.

9. The system of any one of claims 1 to 8, wherein the processor is configured to generate the QRN by combining the retained IQRNs in accordance with a mathematical operation.

10. The system of claim 9, wherein the mathematical operation is a non-entropy decreasing operation.

11. The system of claim 9 or 10, wherein the mathematical operation is an XOR bitwise operation.

12. The system of claim 9, wherein the mathematical operation comprises aggregating the retained IQRNs.

13. The system of any one of claims 11 to 12, comprising a transmitter configured to send a request for the QRN.

14. A method for generating a quantum random number "QRN", the method comprising:

receiving from a plurality of nodes in a quantum network a plurality of initial quantum random numbers "IQRNs", wherein each initial quantum random number "IQRN" is generated by executing a quantum protocol between a first node and a second node comprised in the quantum network, and wherein each IQRN is associated with a first unique identifier "ID" uniquely identifying the first node, and a second unique identifier uniquely identifying the second node;
analysing the plurality of IQRNs and retaining a subset of the IQRNs that satisfy a consensus criterion; and,
generating the QRN using the subset of retained IQRNs.

15. The method of claim 14, comprising:

analysing each one of the plurality of IQRNs in accordance with a verification protocol, to identify a plurality of verified IQRNs, the plurality of verified IQRNs comprising each one of the plurality of IQRNs satisfying the verification protocol; and
determining, based on the plurality of verified IQRNs and their associated first and second unique identifiers, the subset of IQRNs that satisfy the consensus criterion by retaining verified IQRNs associated with a subset of nodes of the quantum network that have generated a verified IQRN with each other node in the subset of nodes.

16. The method of claim 14 or 15, wherein the quantum protocol comprises a quantum key distribution "QKD" protocol, and analysing each of the plurality of IQRNs in accordance with the verification protocol comprises:
analysing, for each one of the plurality of received IQRNs, if the IQRN associated with the first node obtained when executing the quantum protocol with the second node, corresponds with the IQRN associated with the second node obtained when executing the quantum protocol with the first node.

17. The method of claim 16, wherein the first node is configured to send a plurality of quantum particles prepared in accordance with a set of basis to the second node, and the second node is configured to measure the received one or more quantum particles in accordance with a randomly selected one of the set of basis; and

analysing, for each one of the plurality of received IQRNs, if the IQRN associated with the first node, corresponds with the IQRN associated with the second node, comprises:
each one of the first and second nodes retaining bits associated with quantum particles where the second node measured the received quantum particle using the same basis that was used by the first node to prepare the quantum particles;
each node generating its associated IQRN using the retained bits; and
determining if the IQRN generated by the first node corresponds with the IQRN generated by the second node.

18. The method of claim 15, wherein the quantum protocol comprises an interactive proof of quantumness "IPQ" protocol; and analysing each of the plurality of IQRNs in accordance with the verification protocol comprises:
analysing, for each one of the plurality of received IQRNs, verification data reported by the first node and verification data reported by the second node.

19. A method for generating a quantum random number "QRN" by a first node in a quantum network comprising a plurality of other nodes, the method comprising:

executing a quantum protocol with each one of the plurality of other nodes, the output of each executed quantum protocol comprises an initial quantum random number "IQRN", each IQRN is associated with a pair of unique identifiers "IDs", each pair of IDs comprising a first unique identifier uniquely identifying the first node, and a second unique identifier uniquely identifying a node of the plurality of other nodes executing the quantum protocol with the first node; and,

transmitting a first plurality of IQRNs obtained with each one of the plurality of other nodes enabling the QRN to be generated.

20. A system for generating a quantum random number "QRN" in a quantum network comprising a plurality of nodes, the system being configurable in use as a node in the quantum network, and the system comprising:

a processor;

a quantum protocol module configured to execute a quantum protocol with each one of the plurality of nodes comprised in the quantum network, the output of each executed quantum protocol comprises an initial quantum random number "IQRN", each IQRN is associated with a pair of unique identifiers "IDs", each pair of IDs comprising a first unique identifier uniquely identifying the system, and a second unique identifier uniquely identifying a node of the plurality of nodes executing the quantum protocol with the system; and

a communication module configured to transmit a first plurality of IQRNs obtained with each one of the plurality of nodes, the first plurality of IQRNs enabling the QRN to be generated.

21. A non-transitory storage medium, comprising computer executable instructions, which when executed on one or more processors, configure the one or more processors to carry out the method of any one of claims 14 to 19.

# FIG. 1A

**FIG. 1B**

EP 4 708 025 A1

150

| 154-1 | 154-2 | 154-3 | 154-4 | 154-5 | 154-6 |
|---|---|---|---|---|---|
| Demand | $s_{i,j}$ | Nodes ID | Timestamps | Verification data | Vote outcome |
| D | $s_{1,2}$ | $1-2$ | $t_{1,2}$ | $v_{1,2}$ | 1 |
| D | $s_{1,3}$ | $1-3$ | $t_{1,3}$ | $v_{1,3}$ | 0 |
| D | $s_{1,4}$ | $1-4$ | $t_{1,4}$ | $v_{1,4}$ | 1 |
| D | $s_{1,5}$ | $1-5$ | $t_{1,5}$ | $v_{1,5}$ | 1 |
| D | $s_{1,6}$ | $1-6$ | $t_{1,6}$ | $v_{1,6}$ | 1 |
| D | $s_{1,7}$ | $1-7$ | $t_{1,7}$ | $v_{1,7}$ | 1 |
| D | $s_{1,8}$ | $1-8$ | $t_{1,8}$ | $v_{1,8}$ | 1 |
| D | $s_{2,1}$ | $2-1$ | $t_{2,1}$ | $v_{2,1}$ | 1 |
| D | $s_{2,3}$ | $2-3$ | $t_{2,3}$ | $v_{2,3}$ | 1 |
| D | $s_{2,4}$ | $2-4$ | $t_{2,4}$ | $v_{2,4}$ | 1 |
| D | $s_{2,5}$ | $2-5$ | $t_{2,5}$ | $v_{2,5}$ | 0 |
| D | $s_{2,6}$ | $2-6$ | $t_{2,6}$ | $v_{2,6}$ | 1 |
| D | $s_{2,7}$ | $2-7$ | $t_{2,7}$ | $v_{2,7}$ | 1 |
| D | $s_{2,8}$ | $2-8$ | $t_{2,8}$ | $v_{2,8}$ | 1 |
| D | $s_{3,1}$ | $3-1$ | $t_{3,1}$ | $v_{3,1}$ | 0 |
| ⋮ | ⋮ | ⋮ | ⋮ | ⋮ | ⋮ |
| D | $s_{8,7}$ | $8-7$ | $t_{8,7}$ | $v_{8,7}$ | 1 |

152

## FIG. 1C

| USER TERMINAL 110 | | 200a | | QUANTUM NETWORK 120 |

| SEND A REQUEST FOR QRN | → | RECEIVE THE REQUEST FOR QRN |

202

204

| | PERFORM A PLURALITY OF QUANTUM PROTOCOL TO GENERATE A PLURALITY OF IQRNS |

206

| RECEIVE THE PLURALITY OF IQRNs | ← | REPORT THE PLURALITY OF IQRNs |

210

208

| ANALYSE THE PLURALITY OF IQRNs AND RETAIN A SUBSET OF THE IQRNs THAT SATISFY A CONSENSUS CRITERION |

212

| GENERATE THE QRN USING THE SUBSET OF RETAINED IQRNS |

214

**FIG. 2A**

FIG. 2B

200b

USER TERMINAL 110

SEND A REQUEST FOR QRNG — 202

QUANTUM NETWORK 120

RECEIVE THE REQUEST FOR QRNG — 204

PERFORM A PLURALITY OF QUANTUM PROTOCOLS TO GENERATE A PLURALITY OF IQRNs — 206

ANALYSE THE PLURALITY OF IQRNs AND RETAIN A SUBSET OF THE IQRNs THAT SATISFY A CONSENSUS CRITERION — 220

GENERATE THE QRN USING THE SUBSET OF RETAINED IQRNS — 222

RETURN THE QRN — 224

RECEIVE THE QRN — 226

## 212

ANALYSE EACH ONE OF THE PLURALITY OF IQRNs IN ACCORDANCE WITH A VERIFICATION PROTOCOL, TO IDENTIFY A PLURALITY OF VERIFIED IQRNs, THE PLURALITY OF VERIFIED IQRNs COMPRISING EACH ONE OF THE PLURALITY OF IQRNs SATISFYING THE VERIFICATION PROTOCOL

212-1

DETERMINE, BASED ON THE PLURALITY OF VERIFIED IQRNs AND THEIR ASSOCIATED FIRST AND SECOND UNIQUE IDENTIFIERS, THE SUBSET OF IQRNs THAT SATISFY THE CONSENSUS CRITERION BY RETAINING VERIFIED IQRNS ASSOCIATED WITH A SUBSET OF NODES OF THE QUANTUM NETWORK THAT HAVE GENERATED A VERIFIED IQRN WITH EACH OTHER NODE IN THE SUBSET OF NODES

212-2

## FIG. 2C

## 212

212-3 — RECEIVE FROM EACH ONE OF THE PLURALITY OF NODES, AN OUTCOME OF A VERIFICATION PROTOCOL ASSOCIATED WITH EACH RECEIVED IQRN

212-4 — DETERMINE, BASED ON THE OUTCOME OF THE VERIFICATION PROTOCOL ASSOCIATED WITH EACH RECEIVED IQRN AND THE FIRST AND SECOND UNIQUE IDENTIFIERS ASSOCIATED WITH EACH RECEIVED IQRN, THE SUBSET OF IQRNs THAT SATISFY THE CONSENSUS CRITERION, BY RETAINING VERIFIED IQRNS ASSOCIATED WITH A SUBSET OF NODES OF THE QUANTUM NETWORK THAT HAVE GENERATED A VERIFIED IQRN WITH EACH OTHER NODE IN THE SUBSET OF NODES

## FIG. 2D

272 → GENERATE AN ADJACENCY MATRIX, WHEREIN EACH OFF-DIAGONAL ELEMENT OF THE ADJACENCY MATRIX REPRESENTS AN OUTCOME OF THE VERIFICATION PROTOCOL CORRESPONDING TO THE IQRN GENERATED BY THE FIRST NODE ASSOCIATED WITH THE ROW AND THE SECOND NODE ASSOCIATED WITH THE COLUMN

274 → GENERATE, USING THE ADJACENCY MATRIX, A SUB-MATRIX, WHEREIN EACH OFF-DIAGONAL ELEMENT OF THE SUB-MATRIX CORRESPONDS TO A POSITIVE OUTCOME OF THE VERIFICATION PROTOCOL

276 → DETERMINE THE SUBSET OF IQRNs, USING THE FIRST AND SECOND IDS ASSOCIATED WITH EACH OFF-DIAGONAL ELEMENT OF THE SUB-MATRIX TO SELECT THE ASSOCIATED IQRN FOR EACH OFF-DIAGONAL ELEMENT

# FIG. 2E

$$
\begin{array}{c@{\quad}cccccccc}
 & 1 & 2 & 3 & 4 & 5 & 6 & 7 & 8 \\
1 & 0 & s_{1,2} & s_{1,3} & s_{1,4} & s_{1,5} & s_{1,6} & s_{1,7} & s_{1,8} \\
2 & s_{2,1} & 0 & s_{2,3} & s_{2,4} & s_{2,5} & s_{2,6} & s_{2,7} & s_{2,8} \\
3 & s_{3,1} & s_{3,2} & 0 & s_{3,4} & s_{3,5} & s_{3,6} & s_{3,7} & s_{3,8} \\
4 & s_{4,1} & s_{4,2} & s_{4,3} & 0 & s_{4,5} & s_{4,6} & s_{4,7} & s_{4,8} \\
5 & s_{5,1} & s_{5,2} & s_{5,3} & s_{5,4} & 0 & s_{5,6} & s_{5,7} & s_{5,8} \\
6 & s_{6,1} & s_{6,2} & s_{6,3} & s_{6,4} & s_{6,5} & 0 & s_{6,7} & s_{6,8} \\
7 & s_{7,1} & s_{7,2} & s_{7,3} & s_{7,4} & s_{7,5} & s_{7,6} & 0 & s_{7,8} \\
8 & s_{8,1} & s_{8,2} & s_{8,3} & s_{8,4} & s_{8,5} & s_{8,6} & s_{8,7} & 0
\end{array}
$$

300

## FIG. 3A

**FIG. 3B**

$$
\begin{array}{c}
\phantom{0} \\
1 \\
2 \\
3 \\
4 \\
5 \\
6 \\
7 \\
8
\end{array}
\begin{array}{cccccccc}
1 & 2 & 3 & 4 & 5 & 6 & 7 & 8 \\
\left[\begin{array}{cccccccc}
0 & 1 & 0 & 1 & 1 & 1 & 1 & 1 \\
1 & 0 & 1 & 1 & 0 & 1 & 1 & 1 \\
0 & 1 & 0 & 0 & 0 & 0 & 0 & 1 \\
1 & 1 & 0 & 0 & 1 & 1 & 1 & 1 \\
1 & 0 & 0 & 1 & 0 & 1 & 1 & 1 \\
1 & 1 & 0 & 1 & 1 & 0 & 1 & 1 \\
1 & 1 & 0 & 1 & 1 & 1 & 0 & 1 \\
1 & 1 & 1 & 1 & 1 & 1 & 1 & 0
\end{array}\right]
\end{array}
$$

400

# FIG. 4A

EP 4 708 025 A1

FIG. 4B

$$352$$

$$354 \ (s_{1,8}/s_{8,1})$$

$$\underline{450}$$

$$G_{QRNG}^{(comp)} : e_{i,j} = f_v\left(s_{i,j}\right)$$

FIG. 5A

**FIG. 5B**

EP 4 708 025 A1

$$
\begin{array}{c}
\begin{array}{ccccccc} 1 & 2 & 4 & 5 & 6 & 7 & 8 \end{array} \\
\begin{array}{c} 1 \\ 2 \\ 4 \\ 5 \\ 6 \\ 7 \\ 8 \end{array}
\begin{bmatrix}
0 & 1 & 1 & 1 & 1 & 1 & 1 \\
1 & 0 & 1 & 0 & 1 & 1 & 1 \\
1 & 1 & 0 & 1 & 1 & 1 & 1 \\
1 & 0 & 1 & 0 & 1 & 1 & 1 \\
1 & 1 & 1 & 1 & 0 & 1 & 1 \\
1 & 1 & 1 & 1 & 1 & 0 & 1 \\
1 & 1 & 1 & 1 & 1 & 1 & 0
\end{bmatrix}
\end{array}
\quad 500
\qquad \rightarrow \qquad
\begin{array}{c}
\begin{array}{ccccc} 1 & 4 & 6 & 7 & 8 \end{array} \\
\begin{array}{c} 1 \\ 4 \\ 6 \\ 7 \\ 8 \end{array}
\begin{bmatrix}
0 & 1 & 1 & 1 & 1 \\
1 & 0 & 1 & 1 & 1 \\
1 & 1 & 0 & 1 & 1 \\
1 & 1 & 1 & 0 & 1 \\
1 & 1 & 1 & 1 & 0
\end{bmatrix}
\end{array}
\quad 600
$$

# FIG. 6A

EP 4 708 025 A1

$\underline{650}$

$G_{QRNG}^{(full)}$

352

354
$(s_{1,8}/s_{8,1})$

**FIG. 6B**

EP 4 708 025 A1

| SINGLE PHOTON SOURCE 702 | | SINGLE PHOTON MEASURING UNIT 704 |

122

124

1       8

706

Node 1's random key bit:    0    1    1    0    1    0    0    1

Node 1's random basis ($b_1$):

Sent photons polarization:

Node 8's random basis ($b_8$):

Measured photons polarization:

Comparison:

Secret key:    0      1      0      1      $s_{1,8} = s_{8,1}$

**FIG. 7**

**FIG. 8**

EP 4 708 025 A1

FIG. 9

| | | Europäisches Patentamt European Patent Office Office européen des brevets | | EUROPEAN SEARCH REPORT | | Application Number EP 24 19 9620 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LAC NGUYEN ET AL: "A trustless decentralized protocol for distributed consensus of public quantum random numbers", ARXIV.ORG, CORNELL UNIVERSITY LIBRARY, 201 OLIN LIBRARY CORNELL UNIVERSITY ITHACA, NY 14853, 26 August 2021 (2021-08-26), XP091040324, DOI: 10.13140/RG.2.2.25975.55206 * page 1 - page 3; figures 2, 3 * | 1-21 | INV. G06F7/58 |
| A | US 2024/250810 A1 (NOIRIE LUDOVIC [FR] ET AL) 25 July 2024 (2024-07-25) * paragraph [0066] - paragraph [0085]; figures 2A, 2B * | 1-21 | |
| A | SERGUEI POPOV: "On a decentralized trustless pseudo-random number generation algorithm", IACR, INTERNATIONAL ASSOCIATION FOR CRYPTOLOGIC RESEARCH, vol. 20160309:173514, 1 March 2016 (2016-03-01), pages 1-11, XP061020379, [retrieved on 2016-03-01] * page 1 - page 3 * | 1-21 | TECHNICAL FIELDS SEARCHED (IPC) G06F H04L |

The present search report has been drawn up for all claims

| Place of search | Date of completion of the search | Examiner |
|---|---|---|
| Munich | 25 February 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

ANNEX TO THE EUROPEAN SEARCH REPORT
ON EUROPEAN PATENT APPLICATION NO.

EP 24 19 9620

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | Publication date | Patent family member(s) | Publication date |
|---|---|---|---|
| US 2024250810 A1 | 25-07-2024 | CN 118400101 A | 26-07-2024 |
| | | EP 4407926 A1 | 31-07-2024 |
| | | US 2024250810 A1 | 25-07-2024 |

For more details about this annex : see Official Journal of the European Patent Office, No. 12/82

63